# EUROPEAN PATENT APPLICATION

(11) **EP 4 823 197 A1**
(43) Date of publication of application: **14.10.2026**
(21) Application number: 24899788.4
(22) Date of filing: 03.12.2024
(51) Int. Cl.: H04W 72/04, H04W 72/12

(54) **UPLINK TRANSMISSION METHOD AND APPARATUS, UPLINK TRANSMISSION CONFIGURATION METHOD AND APPARATUS, AND COMMUNICATION DEVICE**

(30) Priority: 07.12.2023 CN 202311678513
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Lavoix
(86) International application number: PCT/CN2024/136253
(87) International publication number: WO 2025/119150

(57) **Abstract**

This application discloses an uplink transmission method, an uplink transmission configuration method, an apparatus, and a communication device, and belongs to the field of communication technologies. The uplink transmission method in embodiments of this application includes: receiving, by a terminal, a first message from a network-side device, where the first message indicates to perform N repetitions of a first uplink transmission, and N is a positive integer; and determining, by the terminal based on a second message from the network-side device, a target time domain unit corresponding to the first uplink transmission, where the second message is used to configure at least one time domain unit, and the at least one time domain unit includes a subband full duplex SBFD time domain unit.

## Description

### CROSS-REFERENCE TO RELATED APPLICATIONS

This application claims priority to Chinese Patent Application No. 202311678513.3, filed in China on December 7, 2023, which is incorporated by reference in its entirety.

### TECHNICAL FIELD

This application belongs to the field of communication technologies, and in particular, to an uplink transmission method, an uplink transmission configuration method, an apparatus, and a communication device.

### BACKGROUND

Currently, a communication system supports uplink repetitions, that is, repetitions of one uplink transmission may be performed on a plurality of continuous or discontinuous uplink time domain resources. Currently, an uplink transmission is performed only on an uplink (uplink, UL) symbol or a flexible (flexible) symbol. When the symbol for the uplink transmission includes a semi-static downlink (downlink, DL) symbol or synchronization signal block (Synchronization Signal Block, SSB) symbol, user equipment (User Equipment, UE, also referred to as a terminal) cancels the uplink transmission. In related technologies, a full duplex (Full duplex) transmission technology is introduced to a new radio (New Radio, NR) system. A subband full duplex (subband full duplex, SBFD) time domain resource may be configured for the UE. How to perform a repetition of an uplink transmission under an SBFD configuration is a problem that needs to be resolved.

### SUMMARY

Embodiments of this application provide an uplink transmission method, an uplink transmission configuration method, an apparatus, and a communication device, to resolve a problem of how to perform a repetition of an uplink transmission under an SBFD configuration.

According to a first aspect, an uplink transmission method is provided. The method includes:
receiving, by a terminal, a first message from a network-side device, where the first message indicates to perform N repetitions of a first uplink transmission, and N is a positive integer; and
determining, by the terminal based on a second message from the network-side device, a target time domain unit corresponding to the first uplink transmission, where the second message is used to configure at least one time domain unit, and the at least one time domain unit includes a subband full duplex SBFD time domain unit.

According to a second aspect, an uplink transmission apparatus is provided. The apparatus is used in a terminal and includes:
a receiving module, configured to receive a first message from a network-side device, where the first message indicates to perform N repetitions of a first uplink transmission, and N is a positive integer; and
a first processing module, configured to determine, based on a second message from the network-side device, a target time domain unit corresponding to the first uplink transmission, where the second message is used to configure at least one time domain unit, and the at least one time domain unit includes a subband full duplex SBFD time domain unit.

According to a third aspect, an uplink transmission configuration method is provided, including:
sending, by a network-side device, a first message to a terminal, where the first message indicates to perform N repetitions of a first uplink transmission, and N is a positive integer; and
sending, by the network-side device, a second message to the terminal, where the second message is used to configure at least one time domain unit, and the at least one time domain unit includes a subband full duplex SBFD time domain unit.

According to a fourth aspect, an uplink transmission configuration apparatus is provided. The apparatus is used in a network-side device and includes:
a first sending module, configured to send a first message to a terminal, where the first message indicates to perform N repetitions of a first uplink transmission, and N is a positive integer; and
a second sending module, configured to send a second message to the terminal, where the second message is used to configure at least one time domain unit, and the at least one time domain unit includes a subband full duplex SBFD time domain unit.

According to a fifth aspect, a communication device is provided. The communication device includes a processor and a memory, and the memory stores a program or instructions runnable on the processor; and when executed by the processor, the program or the instructions implement the steps of the method according to the first aspect or the steps of the method according to the third aspect.

According to a sixth aspect, a terminal is provided. The terminal includes a processor and a communication interface. The communication interface is configured to receive a first message from a network-side device, where the first message indicates to perform N repetitions of a first uplink transmission, and N is a positive integer. The processor is configured to determine, based on a second message from the network-side device, a target time domain unit corresponding to the first uplink transmission, where the second message is used to configure at least one time domain unit, and the at least one time domain unit includes a subband full duplex SBFD time domain unit.

According to a seventh aspect, a network-side device is provided. The network-side device includes a processor and a communication interface. The communication interface is configured to: send a first message to a terminal, where the first message indicates to perform N repetitions of a first uplink transmission, and N is a positive integer; and send a second message to the terminal, where the second message is used to configure at least one time domain unit, and the at least one time domain unit includes a subband full duplex SBFD time domain unit.

According to an eighth aspect, a communication system is provided, including a terminal and a network-side device. The terminal may be configured to perform the steps of the uplink transmission method according to the first aspect, and the network-side device may be configured to perform the steps of the uplink transmission configuration method according to the third aspect.

According to a ninth aspect, a readable storage medium is provided. The readable storage medium stores a program or instructions; and when executed by a processor, the program or the instructions implement the steps of the method according to the first aspect or the steps of the method according to the third aspect.

According to a tenth aspect, a chip is provided. The chip includes a processor and a communication interface. The communication interface is coupled to the processor, and the processor is configured to run a program or instructions, to implement the steps of the method according to the first aspect or the steps of the method according to the third aspect.

According to an eleventh aspect, a computer program/program product is provided. The computer program/program product is stored in a storage medium, and the computer program/program product is executed by at least one processor to implement the steps of the method according to the first aspect or the steps of the method according to the third aspect.

In embodiments of this application, the terminal receives the first message from the network-side device, where the first message indicates to perform the N repetitions of the first uplink transmission; and the terminal determines, based on the second message from the network-side device, the target time domain unit corresponding to the first uplink transmission, where the second message is used to configure the at least one time domain unit, and the at least one time domain unit includes the SBFD time domain unit. In this way, the terminal can properly determine a time domain resource position of an uplink repetition that is under an SBFD configuration, so that the terminal can properly perform the uplink repetition under the SBFD configuration, thereby ensuring communication performance of the terminal.

### BRIEF DESCRIPTION OF THE DRAWINGS

FIG. 1 is a diagram of a network structure to which an embodiment of this application may be applied;
FIG. 2 is a diagram of a flexible duplex manner;
FIG. 3 is a flowchart of an uplink transmission method according to an embodiment of this application;
FIG. 4 is diagram 1 of a time unit in which a PUCCH is located according to an embodiment of this application;
FIG. 5 is diagram 2 of a time unit in which a PUCCH is located according to an embodiment of this application;
FIG. 6 is diagram 1 of a PUCCH repetition according to an embodiment of this application;
FIG. 7 is diagram 2 of a PUCCH repetition according to an embodiment of this application;
FIG. 8 is diagram 1 of a PUSCH repetition according to an embodiment of this application;
FIG. 9 is diagram 2 of a PUSCH repetition according to an embodiment of this application;
FIG. 10 is a diagram of a structure of an uplink transmission apparatus according to an embodiment of this application;
FIG. 11 is a flowchart of an uplink transmission configuration method according to an embodiment of this application;
FIG. 12 is a diagram of a structure of an uplink transmission configuration apparatus according to an embodiment of this application;
FIG. 13 is a diagram of a structure of a communication device according to an embodiment of this application;
FIG. 14 is a diagram of a structure of a terminal according to an embodiment of this application; and
FIG. 15 is a diagram of a structure of a network-side device according to an embodiment of this application.

### DETAILED DESCRIPTION

The following clearly describes the technical solutions in embodiments of this application with reference to the accompanying drawings in embodiments of this application. It is clear that the described embodiments are some of embodiments of this application, rather than all of embodiments of this application. Based on embodiments of this application, all other embodiments obtained by persons of ordinary skill in the art shall fall within the protection scope of this application.

The terms "first", "second", and the like in this application are used to distinguish between similar objects, rather than to describe a specific order or sequence. It should be understood that the terms used in such a manner are interchangeable under appropriate circumstances, so that embodiments of this application can be implemented in orders other than those shown or described herein. In addition, the objects distinguished by "first" and "second" are generally of the same kind, and do not limit a quantity of objects. For example, there may be one or more first objects. In addition, "or" in this application indicates at least one of the associated objects. For example, "A or B" covers three schemes, that is, scheme 1: including A and excluding B; scheme 2: including B and excluding A; and scheme 3: including both A and B. The character "/" generally indicates an "or" relationship between the preceding and following associated objects.

The term "indication" in this application may be a direct indication (or an explicit indication), or an indirect indication (or an implicit indication). A direct indication may be understood as that a sender explicitly informs a receiver of specific information, an operation to be performed, a requested result, or the like, in the transmitted indication. An indirect indication may be understood as that the receiver determines corresponding information based on the indication sent by the sender, or performs judgment and determines an operation to be performed, a requested result, or the like based on a result of the judgment.

It should be noted that the technology described in embodiments of this application is not limited to a long term evolution (Long Term Evolution, LTE)/LTE-Advanced (LTE-Advanced LTE-A) system, and may further be applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" in embodiments of this application are often used interchangeably, and the described technologies may be applied to the above-mentioned systems and radio technologies, as well as other systems and radio technologies. The following description describes a new radio (New Radio, NR) system for exemplary purposes, and the term NR is used in most of the following description. However, the technologies may also be applied to systems other than the NR system, for example, the 6^{th} generation communication system (6^{th} Generation, 6G).

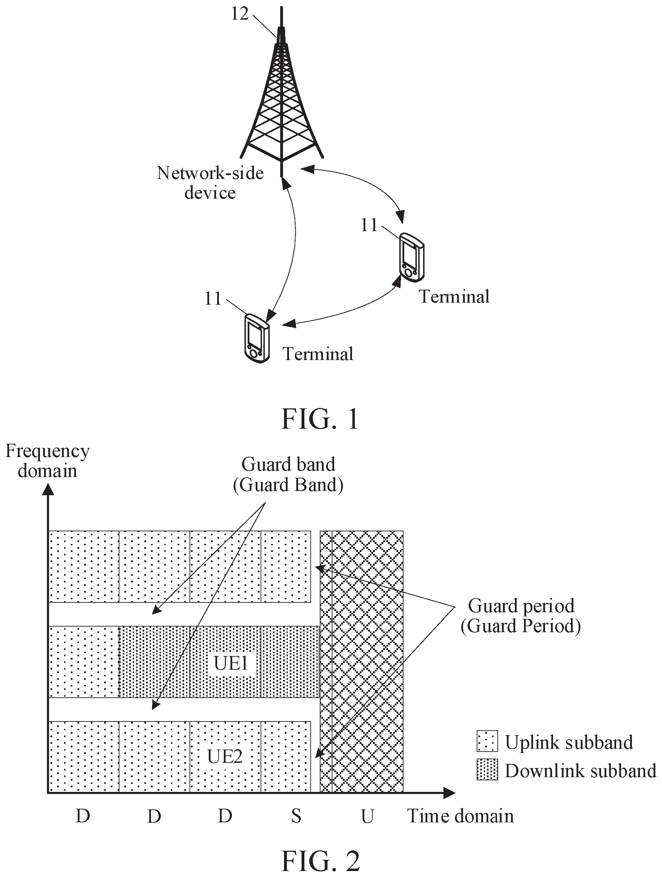

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle(flight vehicle), vehicle user equipment (Vehicle User Equipment, VUE), a ship-mounted device, pedestrian user equipment (Pedestrian User Equipment, PUE), a smart household (a household device with a wireless communication function, such as a refrigerator, a television, a washing machine, or furniture), a game console, a personal computer (Personal Computer, PC), a teller machine, or a self-service machine. The wearable device includes: a smartwatch, a smart bracelet, a smart earphone, smart glasses, smart jewelry (a smart bangle, a smart bracelet, a smart ring, a smart necklace, a smart anklet, a smart ankle chain, and the like), a smart wristband, smart clothing, and the like. The vehicle user equipment may also be referred to as an in-vehicle terminal, an in-vehicle controller, an in-vehicle module, an in-vehicle component, an in-vehicle chip, an in-vehicle unit, or the like. In addition to the foregoing terminal devices, the terminal device may also be a chip in a terminal, for example, a modem (Modem) chip or a system on chip (System on Chip, SoC). It should be noted that a specific type of the terminal 11 is not limited in embodiments of this application. The network-side device 12 may include an access network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a nodeB (NodeB, NB), an evolved nodeB (Evolved NodeB, eNB), a next generation nodeB (the next generation NodeB, gNB), a new radio nodeB (New Radio NodeB, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home nodeB (home NodeB, HNB), a home evolved nodeB (home evolved NodeB), a transmission reception point (Transmission Reception Point, TRP), or some other suitable term in the art. As long as the same technical effect is achieved, the base station is not limited to a specific technical term. It should be noted that in embodiments of this application, only a base station in the NR system is taken as an example for description, and the specific type of the base station is not limited.

Before embodiments of this application are described, a brief introduction to related technologies is provided below.

### 1. Physical uplink control channel (Physical Uplink Control Channel, PUCCH) repetition (repetition)

In NR-related technologies, transmission of a same PUCCH in same time-frequency resource positions in a plurality of slots (slot) or sub-slots (sub-slot) is supported. A quantity of repetition s of the PUCCH is configured by radio resource control (Radio Resource Control, RRC) per (per) PUCCH format (for example, nrofSlots in PUCCH-Format) or PUCCH resource. Specifically, UE may be configured to transmit one PUCCH in ${N}_{PUCCH}^{repeat}$ slots by using one PUCCH resource, where ${N}_{PUCCH}^{repeat}$ represents a quantity of repetitions. If the PUCCH resource is indicated by downlink control information (Downlink Control Information, DCI) and includes a parameter pucch-RepetitionNrofSlots, ${N}_{PUCCH}^{repeat}$ is provided by pucch-RepetitionNrofSlots; otherwise, ${N}_{PUCCH}^{repeat}$ is provided by nrofSlots.

In related technologies, the UE may determine a time unit (or referred to as a time domain unit, for example, a slot or a sub-slot) for PUCCH transmission in the following manner:
(1) for an unpaired spectrum, the UE determines that the ${N}_{PUCCH}^{repeat}$ slots/sub-slots for PUCCH transmission
   start from slot/sub-slot A, and meet:
   the first one symbol (for example, configured by startingSymbolIndex) corresponding to a PUCCH resource is an uplink (Uplink, UL) or flexible (flexible) symbol that is not a synchronization signal (Synchronization Signal, SS) or a physical broadcast channel (Physical broadcast channel, PBCH); and
   starting from the first one symbol corresponding to the PUCCH resource, there are X consecutive UL/flexible symbols that are symbols not for the SS/PBCH, where X is greater than or equal to a quantity of symbols (for example, configured by nrofsymbols) corresponding to the PUCCH resource.
(2) for a paired spectrum or an uplink supplementary band (supplementary uplink band), the UE determines that ${N}_{PUCCH}^{repeat}$ slots for PUCCH transmission are:
   consecutive ${N}_{PUCCH}^{repeat}$ slots starting from slot A.
   Slot/sub-slot A is defined as follows:
   for a hybrid automatic repeat request acknowledgment (Hybrid automatic repeat request acknowledgement, HARQ-ACK), slot/sub-slot A is a slot/sub-slot indicated to the UE for a HARQ-ACK feedback, for example, a slot/sub-slot that is determined based on timing of a PDSCH to HARQ-ACK feedback.

For a scheduling request (Scheduling Request, SR) or channel state information (Channel State Information, CSI), slot A is an SR/CSI transmission slot determined based on the configured periodicity and offset. If in sub-slots, sub-slot A shall further be determined based on a starting symbol position of the PUCCH and a sub-slot length configuration.

In related technologies, during PUCCH transmission, a parameter, such as a transmission power or beam (beam) information (for example, represented by space configuration information PUCCH-SpatialRelationInfo), is configured by an RRC (or is configured by an RRC and activated by a media access control (Media Access Control, MAC) control unit (Control Element, CE)). If the PUCCH corresponds to only one set of power control or space configuration, the UE repeatedly transmits the PUCCH with the same parameter each time. If the PUCCH includes two sets of power control or space configurations, the UE determines a parameter for a PUCCH repetition in the following manners:

if the quantity of PUCCH repetitions is 2, a first space configuration and a second space configuration are respectively used for a first transmission and a second transmission of the PUCCH, or a first power control parameter and a second power control parameter are respectively used for a first transmission and a second transmission of the PUCCH.

During every X repetitions, the first space configuration and the second space configuration are used alternately, or the first power control parameter and the second power control parameter are used alternately, where X is configured by the base station. For example, when the base station configures that mappingPattern='cyclicMapping', X=1; otherwise, X=2.

### 2. Physical uplink shared channel (Physical Uplink Shared Channel, PUSCH) repetition

In related technologies, two types of PUSCH repetitions are supported: PUSCH repetition type A and PUSCH repetition type B. PUSCH repetition type A is a slot-level (level) PUSCH repetition, that is, PUSCH repetitions are performed at same positions in consecutive slots. PUSCH repetition type B is a back-to-back (back-to-back) transmission mode, that is, a back-to-back PUSCH repetition is performed by on consecutive symbol resources. For PUSCH repetition type B, the UE determines a nominal (nominal) repetition position based on a start and length indication value (start and length indication value, SLIV) indicated by time domain resource allocation (Time domain resource allocation, TDRA) as well as a quantity of repetitions, and determines an actual (actual) repetition position based on an invalid symbol. The invalid symbol includes at least one of the following:
a symbol indicated as a DL symbol by semi-static signaling, such as tdd-UL-DL-ConfigurationCommon or tdd-UL-DL-ConfigurationDedicated;
a symbol that is indicated for an unpaired spectrum by ssb-PositionsInBurst (or NonCellDefiningSSB) in ssb-PositionsInBurst (or ServingCellConfigCommon) in a system information block (System Information Block, SIB) to receive an SS/PBCH; and
for UE with reduced half-duplex (half-duplex) capability in a paired spectrum, no symbol starting after N_{Rx-Tx} · T_{c} symbols subsequent to the last symbol of the first symbol, or no symbol ending before N_{Tx-Rx} · T_{c} symbols prior to the first one symbol of the first symbol, where the first symbol includes at least one of the following symbols:
a symbol used for the SS/PBCH and indicated by ssb-PositionsInBurst (or NonCellDefiningSSB) in ssb-PositionsInBurst (or ServingCellConfigCommon) in the SIB;
a symbol for the SS/PBCH indicated by ssb-PositionsInBurst in SSB-MTC-AdditionalPCI associated with reception of a Physical downlink control channel (Physical downlink control channel, PDCCH);
a symbol for the SS/PBCH indicated by ssb-PositionsInBurst in SSB-MTC-AdditionalPCI associated to a physical cell ID with active transmission configuration indicator (Transmission Configuration Indicator, TCI) state for reception of a physical downlink shared channel (Physical downlink shared channel, PDSCH);
a symbol used for the SS/PBCH and indicated by a symbol set of an SS/PBCH measured/reported by a Layer 1 (Layer1, L1) beam;
a symbol indicated for an unpaired spectrum by pdcch-ConfigSIB1 in a master information block (Master Information Block, MIB) as a control resource set (Control resource set, CORESET) used for a type 0-PDCCH common search space (Common Search Space, CSS);
numberOfInvalidSymbolsForDL-UL-Switching symbols after DL symbols configured by a high-layer parameter such as numberOfInvalidSymbolsForDL-UL-Switching, tdd-UL-DL-ConfigurationCommon, or tdd-UL-DL-ConfigurationDedicated if a base station has configured with the high-layer parameter for an unpaired spectrum, where a quantity of symbols indicated by numberOfInvalidSymbolsForDL-UL-Switching is configured or defined by using a reference subcarrier spacing (Subcarrier Spacing, SCS) configured by referenceSubcarrierSpacing in tdd-UL-DL-ConfigurationCommon; and
for a shared spectrum occupied by a semi-static channel, a symbol within an idle (idle) time occupied by a periodic channel.

A high-layer parameter invalidSymbolPattern may be configured for UE, where invalidSymbolPattern provides one symbol-level bitmap (bitmap) within one to two slots, and each bit indicates whether the symbol is an invalid symbol of PUSCH repetition type B. Alternatively, a time domain pattern (pattern) (for example, a high-layer parameter periodicityAndPattern given by invalidSymbolPattern) may be additionally configured for UE, where one bit in periodictiyAndPattern corresponds to a unit of one symbol-level bitmap symbol, and a value of the bit being equal to 1 indicates that there is the unit of the symbol-level bitmap symbol.

Some symbols after the foregoing DL symbols (that is, symbols indicated as DL symbols by tdd-UL-DL-ConfigurationCommon or tdd-UL-DL-ConfigurationDedicated) semi-statically configured by the base station by using the high-layer parameter numberOfInvalidSymbolsForDL-UL-Switching cannot be used for PUSCH repetition type B, but are mainly used for performing DL to UL switching and ensuring other transmissions such as a DL, PUCCH, or sounding reference signal (Sounding Reference Signal, SRS) transmission.

### 3. Flexible duplex (Flexible duplex) SBFD

When a conventional cellular network is deployed, a frequency division duplex (frequency division duplex, FDD) manner or a time division duplex (time division duplex, TDD) manner may be used based on an available spectrum, a service feature, and the like. When FDD is used, an uplink transmission and a downlink transmission are located at different frequencies, do not interfere with each other, and may be performed at the same time. When TDD is used, the uplink transmission and the downlink transmission are located on a same frequency and are staggered in a time division manner. The two duplex manners each have advantages and disadvantages.

To use a limited spectrum resource more flexibly to dynamically match a service requirement, improve resource utilization efficiency, improve uplink coverage of data transmission, reduce a delay, and improve other performances, a flexible duplex manner is provided, including frequency-domain non-overlapping subband full duplex (non-overlapping subband full duplex, subband full duplex for short (SBFD)).

### (1) Network-side full duplex

From a perspective of a network side, at a same time point, an uplink transmission and a downlink transmission may be simultaneously performed in different frequency domain subbands. To avoid interference between uplink and downlink, a guard band (Guard Band, GB) may be reserved between frequency-domain subbands (for example, an uplink subband and a downlink subband) corresponding to different transmission directions.

### (2) Terminal-side half duplex or full duplex

When a terminal side supports a half-duplex operation, only an uplink transmission or a downlink transmission can be performed at a same time point, and the two transmissions cannot be simultaneously performed. It may be understood that, in this case, an uplink transmission and a downlink transmission on a network side at a same time point can only be performed for different terminals.

When the terminal side supports a full duplex operation, at a same time point, an uplink transmission and a downlink transmission may be simultaneously performed in different frequency-domain subbands, which is similar to the network side.

FIG. 2 is a diagram of the foregoing flexible duplex manner. A network side semi-statically divides a frequency domain of a single carrier into three subbands within a part of downlink symbols, where downlink subbands are provided on two sides of the carrier, and an uplink subband is provided in the middle of the carrier, to reduce interference to adjacent carriers. In the third slot, UE1 and UE2 respectively perform an uplink transmission and a downlink reception. In FIG. 2, D represents a downlink symbol, S represents a flexible symbol, and U represents an uplink symbol.

### 4. SBFD configuration or indication

In Release 18 (Rel-18) duplex (Duplex) system information (System Information, SI), SBFD based on network-side full duplex and terminal-side half duplex is researched. Semi-static (Semi-static) SBFD is mainly researched, that is, only an uplink transmission is performed within an uplink subband configured on the network side, and only a downlink transmission is performed within a downlink subband configured on the network side. In addition, a lot of studies are also made on the dynamic (Dynamic) SBFD, including: for a semi-static downlink (downlink, DL) symbol (symbol) in which an UL subband (subband) is configured, a downlink transmission is allowed outside the UL subband. For example, it may be understood that an SBFD configuration of the symbol is disabled, and the semi-static DL symbol in which the UL subband is configured falls back to an original DL symbol. For a semi-static flexible (flexible) symbol in which an UL subband is configured, a downlink transmission is allowed outside the DL subband, and an uplink transmission is allowed outside the UL subband.

In addition, a signaling manner for implementing dynamic SBFD is also discussed, and includes a signaling indication manner based on a scheduling (Scheduling) DCI/non-scheduling (Non-scheduling) DCI/MAC control element (Control Element, CE).

In related technologies, during a PUCCH repetition, transmissions are performed in same time-frequency resources in different time units. When determining a slot for a PUCCH repetition, the terminal only needs to consider a semi-static TDD uplink/downlink configuration. When an SBFD symbol is configured for the UE, how to determine a PUCCH repetition slot or how to perform a PUCCH repetition in an SBFD configuration needs to be considered.

In related technologies, during a repetition of PUSCH repetition type B, a symbol configured or indicated as an invalid symbol cannot be used for a transmission of PUSCH repetition type B. When determining the invalid symbol, the terminal only needs to consider a semi-static TDD uplink/downlink configuration. When an SBFD symbol is configured for UE, how to determine a transmission slot of PUSCH repetition type B or how to perform a repetition of PUSCH repetition type B in an SBFD configuration needs to be considered.

In view of this, embodiments of this application provide an uplink transmission method, and an uplink transmission configuration method, and an apparatus, to resolve a problem in the related technologies that repetition schemes such as a PUCCH repetition and PUSCH repetition type B cannot be applied to full duplex transmission.

For ease of description of the following solutions, related concepts are described in advance.

Based on TDD pattern configuration information provided by the network side to the UE (for example, tdd-UL-DL-ConfigurationCommon or tdd-UL-DL-ConfigurationDedicated provided for a serving cell (Serving cell) of the UE), the following symbol types (Symbol type) may be distinguished: a DL symbol, an UL symbol, and a flexible symbol.

When no tdd-UL-DL-ConfigurationCommon or tdd-UL-DL-ConfigurationDedicated is provided for a serving cell, it may be considered that each symbol type is the flexible symbol, or a rule corresponding to the flexible symbol is complied with.

Based on the foregoing TDD pattern configuration information and SBFD configuration information (which may be referred to an SBFD configuration for short) provided by the network side to the UE, the following symbol type may be further distinguished: an SBFD symbol.

The network side may configure, by using SBFD configuration information, some symbols such that an SBFD operation can be performed, that is, configure these symbols as SBFD symbols. For example, a part or all of the symbols within a single periodicity that are determined based on the TDD pattern are configured as SBFD symbols. These symbols configured as SBFD symbols may be a part or all of the symbol types distinguished based on the TDD pattern configuration information.

For a particular serving cell configured or activated by UE, symbols on the serving cell may be further distinguished from the following three symbol types:

### (1) SBFD symbol for duplex mode 1 (SBFD symbol for duplex mode 1)

For duplex mode 1, the network side supports a full-duplex-based SBFD operation, and a UE side supports only a half-duplex-based SBFD operation. That is, in a single SBFD symbol, the UE can perform only an uplink transmission or a downlink reception, but cannot simultaneously perform the uplink transmission and the downlink reception based on frequency division multiplex (frequency division multiplex, FDM).

### (2) SBFD symbol for duplex mode 2 (SBFD symbol for duplex mode 2)

For duplex mode 2, the network side supports a full-duplex-based SBFD operation, and the UE side can support a full-duplex-based SBFD operation. That is, within a single SBFD symbol, the UE can simultaneously perform FDM-based uplink transmission and downlink reception.

It may be understood that, UE that supports a full-duplex-based SBFD operation (that is, supports duplex mode 2 or an SBFD symbol for duplex mode 2) also supports a half-duplex-based SBFD operation (that is, supports duplex mode 1 or an SBFD symbol for duplex mode 1).

### (3) Non-SBFD (non-SBFD) symbol

Any symbol that is not configured (or indicated) to perform an SBFD operation may be considered as a non-SBFD symbol.

In related discussions of Rel-18 Duplex SI, it is proposed to distinguish between symbol types (for example, two symbol types in total: an SBFD symbol and a non-SBFD symbol, or three symbol types in total: an SBFD symbol for duplex mode 1, an SBFD symbol for duplex mode 2, and a non-SBFD symbol) based on the SBFD configuration information, and corresponding uplink transmission parameters may be separately (directly) configured or derived (implicitly based on a frequency domain offset (Offset), respective starting reference points, and the like) for different symbol types, to consider/compensate for frequency domain resources, antenna and radio frequency configurations, interference situations, limitations, and the like corresponding to different symbol types.

In this embodiment of this application, an SBFD type and a non-SBFD type are mainly considered. The SBFD type may include at least one of an SBFD symbol for a duplex mode 1 and an SBFD symbol for a duplex mode 2.

The following describes in detail an uplink transmission method, an uplink transmission apparatus, an uplink transmission configuration method, and an uplink transmission configuration apparatus according to embodiments of this application by using some embodiments and application scenarios thereof with reference to the accompanying drawings.

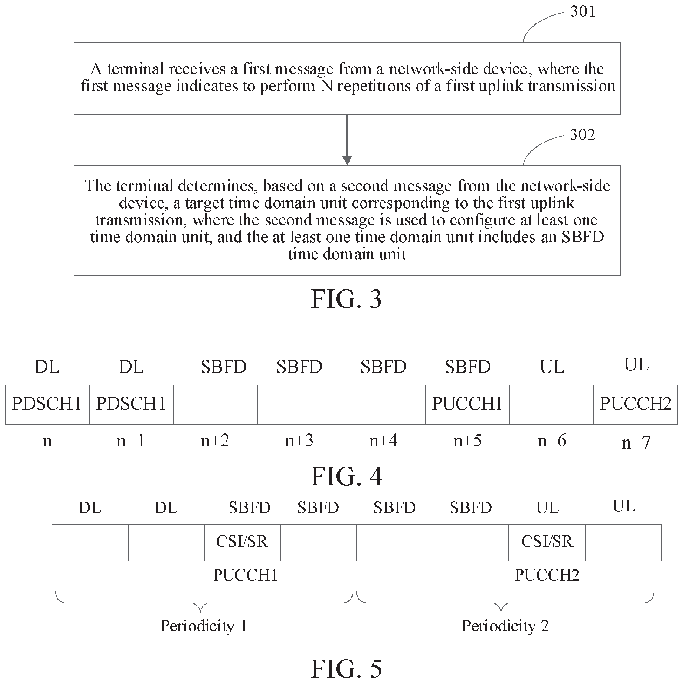

FIG. 3 is a flowchart of an uplink transmission method according to an embodiment of this application. As shown in FIG. 3, the uplink transmission method includes the following steps:

Step 301: A terminal receives a first message from a network-side device, where the first message indicates to perform N repetitions of a first uplink transmission, and N is a positive integer.

Step 302: The terminal determines, based on a second message from the network-side device, a target time domain unit corresponding to the first uplink transmission, where the second message is used to configure at least one time domain unit, and the at least one time domain unit includes an SBFD time domain unit.

In this embodiment of this application, the time domain unit may be understood as a specific time domain position. For example, slot i may be considered as one time domain unit, and a j^{th} symbol in slot i may also be considered as one time domain unit. The SBFD time domain unit may be understood as a time domain unit of which a time domain pattern is SBFD. A time domain granularity corresponding to the time domain unit may include a system frame, a sub-frame, a slot, a sub-slot, a symbol set, a symbol, or the like. For example, an SBFD symbol, an SBFD slot, an SBFD sub-slot, or the like all belong to the SBFD time domain unit.

The first uplink transmission may include, for example, an uplink transmission such as a PUCCH, an SRS, or a PUSCH. This is not limited in embodiments of this application.

The at least one time domain unit configured by using the second message includes the SBFD time domain unit. Therefore, the second message may be understood as a message carrying SBFD configuration information, or may be understood as information for configuring the SBFD time domain unit.

That terminal determines, based on a second message from the network-side device, a target time domain unit corresponding to the first uplink transmission may be understood as that the terminal determines, based on the SBFD configuration information, the target time domain unit corresponding to the first uplink transmission. The following two specific determining manners may be included:
(1) a direct determining manner: The terminal directly determines the target time domain unit used for the first uplink transmission. For example, the manner may be applied to a PUCCH repetition; and
(2) an indirect determining manner: The terminal determines whether some time domain units are invalid time domain units, to indirectly determine the target time domain unit used for the first uplink transmission. For example, the manner may be applied to PUSCH repetition type B.

The foregoing two determining manners are presented subsequently by using specific implementations.

It should be noted that for N first uplink transmissions, the target time domain unit determined by UE may include N time domain units.

In this embodiment of this application, the terminal receives the first message from the network-side device, where the first message indicates the N repetitions of the first uplink transmission; and the terminal determines, based on the second message from the network-side device, the target time domain unit corresponding to the first uplink transmission, where the second message is used to configure the at least one time domain unit, and the at least one time domain unit includes the SBFD time domain unit. In this way, the terminal can properly determine a time domain resource position of an uplink repetition under an SBFD configuration, so that the terminal can properly perform the uplink repetition under the SBFD configuration, thereby ensuring communication performance of the terminal.

The following uses the direct determining manner to describe a related implementation of determining a target time domain unit corresponding to the first uplink transmission:

In some embodiments, that the terminal determines, based on a second message from the network-side device, a target time domain unit corresponding to the first uplink transmission includes:

determining, by the terminal, N time domain units starting from a first time domain unit in the at least one time domain unit that meet a first preset condition, as the target time domain unit.

The first preset condition includes at least one of the following:
A target symbol is a symbol not for an SS or a PBCH;
the target symbol is an UL symbol, a flexible symbol, or an SBFD symbol;
X consecutive symbols starting from the target symbol are symbols not for the SS or the PBCH; and
X consecutive symbols starting from the target symbol are UL symbols, flexible symbols, or SBFD symbols, where
X is an integer greater than or equal to a quantity of symbols corresponding to the first uplink transmission; and
the target symbol is configured by using a starting symbol index corresponding to the first uplink transmission.

For example, the target symbol is configured by the first one symbol (or referred to as a starting symbol) corresponding to a PUCCH resource, for example, a parameter startingSymbolIndex.

The implementation is that the terminal searches, starting from the first time domain unit in the at least one time domain unit configured by the network-side device, for a time domain unit of any time domain pattern whose target symbol (or X consecutive symbols starting from the target symbol) is not for the SS/PBCH and that includes an uplink available resource, as a target time domain unit.

Optionally, the first time domain unit includes at least one of the following:
a time domain unit indicated to feed back first information, where the first information includes a HARQ-ACK, where
a time domain unit that is used for sending second information and that is determined based on a periodicity and an offset of the second information, where the second information includes at least one of an SR and a CSI.

In this implementation, the UE does not need to consider a time domain resource of a specific time domain pattern on which the first uplink transmission needs to be performed, and the target time domain unit determined in this way may include time domain units of different time domain patterns. For example, a part of the target time domain units is an SBFD time domain unit, and another part of the target time domain units is a non-SBFD time domain unit.

It should be noted that, when a sub-slot PUCCH repetition is configured, the first time domain unit (the first time domain unit is a sub-slot) can further be determined based on a starting symbol of a PUCCH corresponding to a CSI/SR and a sub-slot length configuration.

In this embodiment of this application, two time domain patterns are defined: an SBFD time domain pattern (which may be briefly referred to as an SBFD type) and a non-SBFD time domain pattern (which may be briefly referred to as a non-SBFD type). For example, an SBFD symbol, an SBFD slot, an SBFD sub-slot, or the like all belong to the SBFD time domain pattern, and an uplink symbol, an uplink slot, an uplink sub-slot, a downlink symbol, a downlink slot, a downlink sub-slot, a flexible symbol, a flexible slot, a flexible sub-slot, or the like all belong to the non-SBFD time domain pattern. That is, the target time domain unit determined in this implementation may include a time domain unit of the SBFD time domain pattern, or may include a time domain unit of the non-SBFD time domain pattern.

When a time domain resource corresponding to a repetition of the first uplink transmission falls within different types of time domain units (that is, overlaps with different types of time domain units), the UE may cancel the repetition.

For example, it is assumed that during a PUCCH repetition, transmission is performed only in time domain units of a same time domain pattern (for example, an SBFD time domain unit or a non-SBFD time domain unit). When a time domain resource of a PUCCH repetition falls within different types of time domain units, the UE cancels the PUCCH repetition.

In some embodiments, the target time domain unit further satisfies at least one of the following:
symbols that are used for the first uplink transmission and that are in the target time domain unit are all SBFD symbols or non-SBFD symbols; and
an SBFD uplink subband of the target time domain unit covers a frequency domain resource of the first uplink transmission.

For example, if the target time domain unit is a time domain unit meeting that symbol positions corresponding to the PUCCH repetition are all SBFD symbols, the target time domain unit further needs to meet that a corresponding frequency domain resource of the PUCCH repetition is in an UL subunit when the PUCCH repetition is performed in the SBFD time domain unit.

For example, when a corresponding frequency domain resource for a transmission of the PUCCH repetition in the SBFD time domain unit satisfies a condition of an UL subband, the target time domain unit may be a time domain unit whose time domain resource of the PUCCH is an SBFD symbol; otherwise, the target time domain unit is a time domain unit whose time domain resource of the PUCCH is an UL/flexible symbol.

As described above, because the UE determines the target time domain unit without considering the time domain resource of the specific time domain pattern on which the first uplink transmission needs to be performed, in this implementation, the foregoing condition is used to assist the UE in determining the target time domain unit, so that the determined target time domain unit can meet a requirement of the first uplink transmission as much as possible.

In some embodiments, it is determined that the first uplink transmission is performed on a time domain resource of a target time domain pattern, where the target time domain pattern includes an SBFD time domain pattern or a non-SBFD time domain pattern.

The method further includes:
in a case that a time domain pattern of a second time domain unit of the first uplink transmission does not match the target time domain pattern, cancelling, by the terminal, performing the first uplink transmission in the second time domain unit, where
the second time domain unit is at least one time domain unit in the target time domain unit corresponding to the first uplink transmission.

As described above, because the UE determines the target time domain unit without considering the time domain resource of the specific time domain pattern on which the first uplink transmission needs to be performed, the determined target time domain unit may not match the determined target time domain pattern for the first uplink transmission. In this implementation, when the time domain pattern of the second time domain unit in the target time domain unit does not match the target time domain pattern, the terminal may cancel performing the first uplink transmission in the second time domain unit.

Optionally, the method further includes:
adding, by the terminal, a quantity of the second time domain units to a total quantity of the target time domain units.

In some embodiments, it is determined that the first uplink transmission is performed on a time domain resource of an SBFD time domain pattern.

The determining, by the terminal based on a second message from the network-side device, a target time domain unit corresponding to the first uplink transmission includes:
determining, by the terminal, N time domain units starting from a first time domain unit in the at least one time domain unit that meet a second preset condition, as the target time domain unit.

The second preset condition includes at least one of the following:
A target symbol is an SBFD symbol not for an SS or a PBCH;
the target symbol is an SBFD symbol;
X consecutive symbols starting from the target symbol are SBFD symbols not for the SS or the PBCH; and
X consecutive symbols starting from the target symbol are SBFD symbols, where
X is an integer greater than or equal to a quantity of symbols corresponding to the first uplink transmission; and
the target symbol is configured by using a starting symbol index corresponding to the first uplink transmission.

The implementation is that the terminal searches, starting from the first time domain unit in the at least one time domain unit configured by the network-side device, for an SBFD time domain unit whose target symbol (or X consecutive symbols starting from the target symbol) is not for the SS/PBCH, as the target time domain unit.

Optionally, the first time domain unit includes at least one of the following:
a time domain unit indicated to feed back first information, where the first information includes a HARQ-ACK, where
a time domain unit that is used for sending second information and that is determined based on a periodicity and an offset of the second information, where the second information includes at least one of an SR and a CSI.

For example, the target symbol is configured by the first one symbol (or referred to as a starting symbol) corresponding to a PUCCH resource, for example, startingSymbolIndex.

In this implementation, the UE needs to consider a time domain resource of a specific time domain pattern on which the first uplink transmission needs to be performed, and the target time domain unit determined in this way belongs to a same time domain pattern. This manner may be understood as that in a process in which the UE determines the target time domain unit corresponding to the first uplink transmission, if time domain units of different time domain patterns are encountered, the UE skips the time domain unit and selects a subsequent time domain unit of the same time domain pattern. This is equivalent to that the UE postpones a repetition of the first uplink transmission.

In some embodiments, it is determined that the first uplink transmission is performed on a time domain resource of a non-SBFD time domain pattern.

The determining, by the terminal based on a second message from the network-side device, a target time domain unit corresponding to the first uplink transmission includes:
determining, by the terminal, N time domain units starting from a first time domain unit in the at least one time domain unit that meet a third preset condition, as the target time domain unit.

The third preset condition includes at least one of the following:
A target symbol is an uplink symbol or a flexible symbol not for an SS or a PBCH; and
X consecutive symbols starting from the target symbol are uplink symbols or flexible symbols not for the SS or the PBCH, where X is an integer greater than or equal to a quantity of symbols corresponding to the first uplink transmission; and
the target symbol is configured by using a starting symbol index corresponding to the first uplink transmission.

The implementation is that the terminal searches, starting from the first time domain unit in the at least one time domain unit configured by the network-side device, for a non-SBFD time domain unit whose target symbol (or X consecutive symbols starting from the target symbol) is not for the SS/PBCH, as the target time domain unit.

Optionally, the first time domain unit includes at least one of the following:
a time domain unit indicated to feed back first information, where the first information includes a HARQ-ACK; and
a time domain unit that is used for sending second information and that is determined based on a periodicity and an offset of the second information, where the second information includes at least one of an SR and CSI.

For example, the target symbol is the first one symbol (or referred to as a starting symbol) corresponding to the PUCCH resource, for example, the first one symbol (or referred to as a starting symbol) corresponding to the first uplink transmission configured by startingSymbolIndex.

In this implementation, the UE needs to consider a time domain resource of a specific time domain pattern on which the first uplink transmission needs to be performed, and the target time domain unit determined in this way belongs to a same time domain pattern. This manner may be understood as that in a process in which the UE determines the target time domain unit corresponding to the first uplink transmission, if time domain units are of different time domain patterns, the UE skips the time domain unit and selects a subsequent time domain unit of the same time domain pattern. This is equivalent to that the UE postpones a repetition of the first uplink transmission.

In some embodiments, the method further includes:
performing, by the terminal, a first operation in a case that a channel for the first uplink transmission overlaps a channel for the second uplink transmission, where the first operation includes at least one of the following:
cancelling the first uplink transmission;
cancelling the second uplink transmission; and
multiplexing the first uplink transmission and the second uplink transmission.

The first uplink transmission and the second uplink transmission may be, for example, a PUCCH and a PUCCH, or may be a PUCCH and a PUSCH.

The foregoing first operation may be understood as overlapping processing or intra-UE (intra-UE) overlapping processing. A manner of the overlapping processing includes, for example, multiplexing (multiplexing) (that is, multiplexing, onto one channel for transmission, content carried on different channels), and cancellation (cancellation) (that is, cancelling transmission of a part of channels, where the cancellation may be understood as no transmission and discarding), or prioritization (prioritization) (that is, cancelling transmission of a part of channels based on a priority, and the cancellation may be understood as no transmission and discarding), or the like.

In some embodiments, the performing, by the terminal, a first operation in a case that a channel for the first uplink transmission overlaps a channel for the second uplink transmission includes:
in a case that the channel for the first uplink transmission overlaps the channel for the second uplink transmission, determining, by the terminal based on the at least one time domain unit configured by the second message, whether the first uplink transmission and the second uplink transmission are valid; and
performing, by the terminal, the first operation in a case that it is determined that the first uplink transmission and the second uplink transmission are valid.

It should be noted that the network-side device sends the second message to the terminal to configure the at least one time domain unit for the terminal. Because the at least one time domain unit includes the SBFD time domain unit, the second message may be understood as SBFD configuration information. That is, the determining, by the terminal based on the at least one time domain unit configured by the second message, whether the first uplink transmission and the second uplink transmission are valid may be understood as determining, by the terminal based on the SBFD configuration information, whether the first uplink transmission and the second uplink transmission are valid.

It may be understood that the SBFD configuration information includes time domain configuration information, for example, which time domain units are SBFD time domain units and which time domain units are non-SBFD time domain units. In addition, the SBFD configuration information may further include a frequency domain configuration corresponding to the SBFD, and an SBFD UL subband may be determined based on an SBFD frequency domain configuration. In this way, whether an uplink transmission is valid may be determined depending on whether a frequency domain resource of the uplink transmission falls within the SBFD UL subband.

In this implementation, when the channel for the first uplink transmission overlaps the channel for the second uplink transmission, the terminal may first perform a validity check. If the first uplink transmission or the second uplink transmission is invalid, the UE may not perform overlapping processing between the uplink transmissions, or the invalid uplink transmission channel does not participate in the overlapping processing. If the first uplink transmission or the second uplink transmission is valid, the UE performs overlapping processing between the uplink transmissions, or the foregoing channel participates in the overlapping processing. This manner can avoid some unnecessary discarding.

In some embodiments, the method further includes:
determining, by the terminal, a target time domain pattern corresponding to an S^{th} repetition of the first uplink transmission, where the time domain pattern includes an SBFD time domain pattern or a non-SBFD time domain pattern, and S is a positive integer less than or equal to N; and
determining, by the terminal, a transmission parameter for the S^{th} repetition based on the target time domain pattern.

The determining, by the terminal, a target time domain pattern corresponding to an S^{th} repetition of the first uplink transmission may be understood as: determining, by the terminal, whether the S^{th} repetition of the first uplink transmission is an SBFD uplink transmission or a non-SBFD uplink transmission, where the SBFD uplink transmission indicates an uplink transmission of an SBFD time domain pattern, and the non-SBFD uplink transmission indicates an uplink transmission of a non-SBFD time domain pattern.

The terminal determines the transmission parameter for the S^{th} repetition of the first uplink transmission based on the target time domain pattern, so that the transmission parameter for the S^{th} repetition of the first uplink transmission is more proper, thereby helping ensure communication performance of the terminal. For example, the target time domain pattern is the SBFD time domain pattern. Because the terminal may simultaneously perform uplink sending and downlink reception in a same time domain unit, and uplink sending may cause interference to downlink reception, when the target time domain pattern corresponding to the S^{th} repetition of the first uplink transmission is the SBFD time domain pattern, the terminal may use a low transmission power to perform the S^{th} repetition of the first uplink transmission, so as to reduce interference caused by the S^{th} repetition of the first uplink transmission to downlink reception, thereby ensuring communication performance of the terminal. When the target time domain pattern corresponding to the S^{th} repetition of the first uplink transmission is the non-SBFD time domain pattern, the terminal may use a high transmission power to perform the S^{th} repetition of the first uplink transmission, so as to improve reliability of the S^{th} repetition of the first uplink transmission, thereby ensuring communication performance of the terminal.

In some embodiments, the determining, by the terminal, a transmission parameter for the S^{th} repetition based on the target time domain pattern includes:
receiving, by the terminal, a third message from the network-side device, where the third message includes a first transmission configuration item and a second transmission configuration item, a mapping relationship exists between the first transmission configuration item and the SBFD time domain pattern, and a mapping relationship exists between the second transmission configuration item and the non-SBFD time domain pattern;
determining, by the terminal, a target transmission configuration item from the first transmission configuration item and the second transmission configuration item based on the target time domain pattern; and
determining, by the terminal, a transmission parameter associated with the target transmission configuration item as the transmission parameter for the S^{th} repetition.

The first transmission configuration item may include one or more transmission configurations, and the first transmission configuration item may also include one or more transmission configurations. When a plurality of transmission configurations are included, the plurality of transmission configurations may be respectively used for uplink transmissions of different priorities.

For example, for a PUCCH transmission, the first transmission configuration item is PUCCH-configList1, and the second transmission configuration item is PUCCH-configList2. Specifically, the base station makes configuration such that PUCCH-configList1 is used for a transmission of an SBFD symbol, and that PUCCH-configList2 is used for a transmission of a non-SBFD symbol. Each PUCCH-configList may include one or more PUCCH-config, for example, respectively used for transmissions of UCI of a high priority and a low priority. Each PUCCH-config includes a PUCCH resource, a PUCCH transmission power control parameter, a spatial information parameter (for example, a beam parameter), or the like.

In this implementation, different transmission configuration items are respectively configured for different time domain patterns, so that the terminal can directly select a corresponding transmission configuration item based on a determined time domain pattern, so as to efficiently determine a proper transmission parameter, thereby helping ensure communication performance of the terminal.

It should be noted that in this embodiment of this application, in addition to by using a solution of "determining, by the terminal, a target transmission configuration item from the first transmission configuration item and the second transmission configuration item based on the target time domain pattern" may be used to determine the transmission parameter for the S^{th} repetition, the terminal may further directly determine the transmission parameter for the S^{th} repetition, to reduce intermediate processes. For example, in a case that a time domain unit in which the S^{th} repetition is located is configured as an SBFD time domain unit, the terminal determines that the target time domain pattern is the SBFD time domain pattern, and the terminal determines to use the transmission parameter in the first transmission configuration item to perform the S^{th} repetition.

Optionally, the transmission parameter includes at least one of a power control parameter and spatial information (for example, a beam parameter).

In addition, the transmission parameter may further include parameters such as a transmission configuration, a feedback timing set, or a transmission bit rate.

In some embodiments, a manner of determining, by the terminal, the target time domain pattern includes at least one of the following:
in a case that a time domain unit in which the S^{th} repetition is located is configured as an SBFD time domain unit, determining, by the terminal, that the target time domain pattern is the SBFD time domain pattern;
in a case that the time domain unit in which the S^{th} repetition is located is configured as a non-SBFD time domain unit, determining, by the terminal, that the target time domain pattern is the non-SBFD time domain pattern;
in a case that all symbols in which the S^{th} repetition is located are SBFD symbols, determining, by the terminal, that the target time domain pattern is the SBFD time domain pattern;
in a case that all symbols on which the S^{th} repetition is located are non-SBFD symbols, determining, by the terminal, that the target time domain pattern is the non-SBFD time domain pattern; and
in a case that the time domain unit in which the S^{th} repetition is located includes both an SBFD symbol and a non-SBFD symbol, determining, by the terminal, the target time domain pattern based on a target manner, where
the target manner includes at least one of the following:
   determining the target time domain pattern based on a quantity of included SBFD symbols and a quantity of included non-SBFD symbols;
   determining the target time domain pattern based on a time domain pattern of a symbol that is located at a predefined position and that is in the time domain unit in which the S^{th} repetition is located; and
   determining the target time domain pattern based on a predefined or default time domain pattern of the time domain unit in which the S^{th} repetition is located.

For example, if the time domain unit in which the S^{th} repetition is located is configured as an SBFD time domain unit, or the time domain unit in which the S^{th} repetition is located includes only an SBFD symbol, the target time domain pattern is an SBFD type.

For example, if the time domain unit in which the S^{th} repetition is located is not configured as an SBFD time domain unit, or the time domain unit in which the S^{th} repetition is located includes only a non-SBFD symbol, the target time domain pattern is a non-SBFD type.

For example, if the time domain unit in which the S^{th} repetition is located includes both an SBFD symbol and a non-SBFD symbol, the target time domain pattern is determined in any one of the following:
a quantity of SBFD symbols and non-SBFD symbols in the time domain unit, and a time domain pattern for a large number of symbols;
a predefined position in the time domain unit, for example, a time domain pattern corresponding to the first one symbol or the last symbol;
a predefined/default SBFD or non-SBFD type; and
a time domain pattern of a symbol on which the uplink transmission in the time domain unit is located.

The foregoing is a related implementation of using the direct determining manner to determine the target time domain unit corresponding to the first uplink transmission. The foregoing implementation is applicable to the PUCCH repetition.

The following provides description of a related implementation of using an indirect determining manner to determine the target time domain unit corresponding to the first uplink transmission.

In some embodiments, the determining, by the terminal based on a second message from the network-side device, a target time domain unit corresponding to the first uplink transmission includes:
determining, by the terminal based on the second message, whether L time domain units located after the third time domain unit are invalid time domain units, where a value of L is configured by a high layer, the third time domain unit is a downlink time domain unit semi-statically configured by using high-layer signaling, and the invalid time domain unit is not used for performing the first uplink transmission.

For example, if numberOfInvalidSymbolsForDL-UL-Switching is configured at a high layer, a value of L is a value of numberOfInvalidSymbolsForDL-UL-Switching.

As described above, the second message may be understood as a message carrying SBFD configuration information. Therefore, the implementation lies in that, by determining, based on the SBFD configuration information, whether the L time domain units located after the third time domain unit are invalid time domain units, the UE indirectly determines the target time domain unit (or referred to as an available time unit or an available time domain unit) corresponding to the first uplink transmission.

For example, the UE may determine a time domain unit that is located after the third time domain unit and that is not determined as an invalid time domain unit, as a target time domain unit of PUSCH repetition type B.

In this implementation, the UE can determine an available time unit for an uplink repetition based on the SBFD configuration information. This can improve validity of the uplink repetition, thereby improving validity of a communication system.

In some embodiments, the determining, by the terminal based on the second message, whether L time domain units located after the third time domain unit are invalid time domain units includes at least one of the following:
if the L time domain units located after the third time domain unit are non-SBFD time domain units, determining, by the terminal, that the L time domain units located after the third time domain unit are invalid time domain units;
if the L time domain units located after the third time domain unit are SBFD time domain units, determining, by the terminal, that the L time domain units located after the third time domain unit are not invalid time domain units; and
if the L time domain units located after the third time domain unit include a non-SBFD time domain unit and an SBFD time domain unit, determining, by the terminal, that the non-SBFD time domain unit is an invalid time domain unit, and determining that the SBFD time domain unit is not an invalid time domain unit.

For example, for UE for which SBFD is configured, an invalid symbol of PUSCH repetition type B may be defined as follows:
When numberOfInvalidSymbolsForDL-UL-Switching is configured for the UE, whether or not subsequent numberOfInvalidSymbolsForDL-UL-Switching symbols are invalid symbols is determined depending on whether a semi-statically configured DL (which is a DL symbol not configured as an SBFD symbol) is followed by a non-SBFD symbol or an SBFD symbol.

If numberOfInvalidSymbolsForDL-UL-Switching symbols after a semi-statically configured DL symbol are non-SBFD symbols, according to a related protocol, corresponding numberOfInvalidSymbolsForDL-UL-Switching symbols are invalid symbols, that is, the UE cannot transmit PUSCH repetition type B on these symbols.

If numberOfInvalidSymbolsForDL-UL-Switching symbols after a semi-statically configured DL symbol are SBFD symbols, corresponding numberOfInvalidSymbolsForDL-UL-Switching symbols are not invalid symbols. That is, the UE can transmit PUSCH repetition type B on these symbols.

If numberOfInvalidSymbolsForDL-UL-Switching symbols after a semi-statically configured DL symbol include a non-SBFD symbol and an SBFD symbol, the non-SBFD symbol in the corresponding numberOfInvalidSymbolsForDL-UL-Switching symbols is an invalid symbol, and the SBFD symbol in the corresponding numberOfInvalidSymbolsForDL-UL-Switching symbols is not an invalid symbol. That is, the UE can transmit PUSCH repetition type B on the SBFD symbol in the numberOfInvalidSymbolsForDL-UL-Switching symbols.

The foregoing is a related implementation of using the indirect determining manner to determine the target time domain unit corresponding to the first uplink transmission. The foregoing implementation is applicable to a transmission of PUSCH repetition type B.

To better understand the technical solutions of this application, the following provides specific embodiments to separately describe examples of a PUCCH repetition scheme and a PUSCH repetition type B transmission scheme in this application.

### Embodiment 1: PUCCH repetition scheme

**In** related technologies, when a PUCCH is not configured with a repetition, UE determines a slot/a sub-slot for a PUCCH transmission in the following manner. For example, for a HARQ-ACK, the slot/sub-slot for the PUCCH transmission is determined based on a k1 field in scheduling/activation DCI (or configured at a higher layer (when the DCI does not include the k1 field)). For example, the k1 field indicates that an UL slot/sub-slot n corresponding to the "PDSCH-to-HARQ-ACK feedback timing" and a PDSCH end position (or an end DL slot) is determined as n+k1. For CSI/SR, the UE determines, based on a periodicity corresponding to the CSI/SR and an offset, a transmission slot that is within each periodicity. For example, for the SR, if the periodicity of the SR is greater than one slot, the UE determines that a slot ${n}_{s , f}^{μ}$ in which one SR PUCCH transmission occasion is located satisfies $\left({n}_{f}⋅{N}_{slot}^{frame , μ}+{n}_{s , f}^{μ}-{SR}_{OFFSET}\right) mod {SR}_{PERIODICITY} = 0$, where *n_{f}* is a frame (frame) number, ${N}_{slot}^{frame , μ}$ is a quantity of slots included in one frame (in a case that an SCS is *µ*, SR_{OFFSET} is an offset of the SR, and *SR*_{PERIODICITY} is a periodicity of the SR.

**In** related technologies, when a repetition is configured for a PUCCH, the base station may make configuration per PUCCH format or per PUCCH resource, for example, a parameter pucch-RepetitionNrofSlots or nrofSlots. The UE may determine a PUCCH transmission slot based on a semi-static uplink/downlink configuration.

This embodiment provides a method for the UE to determine a time domain resource type (which may be a time domain pattern for short) of a PUCCH transmission and a time unit for a PUCCH repetition when an SBFD time domain resource is configured for the UE.
1. The UE determines the time domain pattern of the PUCCH transmission, that is, the UE determines whether the PUCCH transmission is an SBFD transmission (that is, the time domain pattern of the PUCCH transmission is an SBFD type) or a non-SBFD transmission (that is, the time domain pattern of the PUCCH transmission is a non-SBFD type).

Herein, a time domain resource corresponding to the SBFD type may include, for example, an SBFD symbol/slot/sub-slot.

Method 1: Determine the time domain pattern of the PUCCH transmission based on pre-configured information, for example:
Method 1-1: Determine the time domain pattern of the PUCCH transmission based on PUCCH-config/resourceList or a resource set in which a PUCCH resource is located. For example, the base station separately configures the PUCCH-config/resourceList or the resource set for the UE in an SBFD time domain transmission or a non-SBFD time domain transmission, and the UE determines, based on PUCCH-config/resourceList or the resource set in which the PUCCH is located, a time domain pattern of a PUCCH transmission.
Method 1-2: Determine the time domain pattern of the PUCCH transmission based on a pre-configured time domain pattern corresponding to the PUCCH resource. For example, the base station configures a time domain pattern (for example, per resource configured) of a PUCCH transmission for each PUCCH resource.
Method 1-3: Determine the time domain pattern of the PUCCH transmission based on pre-configured information corresponding to information or a signal carried in the PUCCH resource. For a PUCCH carrying a HARQ-ACK, the time domain pattern of the PUCCH transmission is determined based on a codebook in which the HARQ-ACK is located, such as a codebook in which the HARQ-ACK is located and which is indicated by scheduling DCI or configured by RRC. For the CSI/SR, a transmission time domain pattern corresponding to the CSI/SR is configured at a high layer (for example, per CSI/SR configured).

Method 2: Determine the time domain pattern of the PUCCH transmission according to a predefined rule, for example:
Method 2-1: Determine the time domain pattern of the PUCCH transmission based on a type of a time domain resource on which the first transmission is nominally located. Specifically,
the time domain pattern of the PUCCH transmission for a HARQ-ACK/PUSCH is a type corresponding to a time unit in which the UE is indicated to transmit the HARQ-ACK/PUSCH. As shown in FIG. 4, PDSCH1 and PDSCH2 are indicated to feed back a HARQ-ACK at slot n+5 and slot n+7 respectively. Based on the SBFD configuration, slot n+5 is an SBFD slot, and slot n+7 is a non-SBFD slot. In this case, the UE determines that time domain patterns of PUCCH1 and PUCCH2 are respectively an SBFD type and a non-SBFD type.

For an SR/CSI/CG-PUSCH/SRS, the time domain pattern of the PUCCH transmission is a type of a time unit that is determined by the UE based on a periodicity and an offset of the SR/CSI/CG-PUSCH/SRS (and a starting symbol position and a sub-slot configuration) within the period. As shown in FIG. 5, the UE determines, based on the periodicity and the offset of the CSI/SR, CSI/SR transmission slots in periodicity 1 and periodicity 2. In periodicity 1, a CSI/SR transmission slot is configured as an SBFD slot, and in periodicity 2, a CSI/SR transmission slot is configured as a non-SBFD slot. Therefore, the UE determines that the time domain patterns of PUCCH1 and PUCCH2 are respectively an SBFD type and a non-SBFD type.

Method 2-2: Determine the time domain pattern of the PUCCH transmission based on a type of a time domain resource on which the first actual transmission is located.

For example, the UE determines a time domain resource of the first actual transmission based on the following method:
Starting from time unit A, at least one of the following is satisfied:
The first one symbol (for example, configured by startingSymbolIndex) corresponding to a PUCCH/PUSCH/SRS resource is a symbol that is not for an SS/PBCH (the symbol may be an UL symbol, a flexible symbol, or an SBFD symbol).

X consecutive symbols starting from the first one symbol corresponding to a PUCCH/PUSCH/SRS resource are not symbols for an SS/PBCH (the X symbols may be UL symbols, flexible symbols, or SBFD symbols), where X is greater than or equal to a quantity of symbols (for example, configured by nrofsymbols or indicated by TDRA) corresponding to the PUCCH/PUSCH/SRS resource.

Time unit A includes the following cases:
Case 1: For a HARQ-ACK, time unit A is a time unit indicated by the UE to feed back the HARQ-ACK.
Case 2: For the SR/CSI, time unit A is a time unit that is for sending the SR/CSI and that is determined by the UE based on a periodicity configured for the SR/CSI and an offset within the period. Time unit A may be slot A or sub-slot A. If time unit A is sub-slot A, the UE further needs to determine sub-slot A based on a configuration of a PUCCH starting symbol position and a sub-slot length.

For the method 2-2, because the UE needs to determine the time domain pattern based on a starting symbol and a symbol position of a PUCCH, the method is applicable to a situation in which the UE does not need to determine a starting symbol and a symbol position of one PUCCH resource based on a time domain pattern, for example, a situation in which a time domain resource configuration is common/the same for PUCCH transmissions of the SBFD type and non-SBFD type, or a situation in which a same PUCCH resource indicator (PUCCH Resource Indicator, PRI)/resource ID corresponds to a same time domain position for PUCCH transmissions of the SBFD type and non-SBFD type, or a situation in which an SBFD configuration manner is slot-level (slot-level).

It should be noted that the UL/flexible symbol in this embodiment is a symbol that is configured as an UL or flexible symbol by using semi-static signaling such as tdd-UL-DL-ConfigurationCommon or tdd-UL-DL-ConfigurationDedicated, and is not configured as an SBFD symbol (for example, the symbol is not configured as an SBFD symbol by using the semi-static signaling). The SBFD symbol in this embodiment is an SBFD symbol determined based on high-layer signaling or dynamic signaling. For example, the SBFD symbol is an SBFD symbol determined based on the high-layer signaling.

The time domain pattern (for example, an SBFD symbol/slot/sub-slot) of the uplink transmission determined by the UE may be used to further determine at least one of a time domain resource position (for example, a time domain resource in which the transmission is located) and a transmission parameter (for example, power or a beam) for the uplink transmission. That is, the UE determines, based on the determined time domain pattern of the uplink transmission, at least one of the time domain resource position and the transmission parameter for the uplink transmission.

2. The UE determines, based on the SBFD time domain configuration, to transmit ${N}_{PUCCH}^{repeat}$ time units of the PUCCH.

Scheme 1: During a PUCCH repetition, the transmission is performed only in time units of a same time domain pattern (for example, a time unit of an SBFD type (an SBFD time unit for short), and a time unit of a non-SBFD type (a non-SBFD time unit for short)). When a time domain resource of a PUCCH repetition falls within time units of different time domain patterns, the UE cancels the PUCCH repetition.

In the scheme, the UE determines that ${N}_{PUCCH}^{repeat}$ time units for transmitting the PUCCH
start from time unit A, and meet at least one of the following:
The first one symbol (for example, configured by startingSymbolIndex) corresponding to the PUCCH resource is a symbol not for an SS/PBCH (the symbol may be an UL symbol, a flexible symbol, or an SBFD symbol); and
X consecutive symbols starting from the first one symbol corresponding to the PUCCH resource are not SS/PBCH symbols (the X symbols may be UL symbols, flexible symbols, or SBFD symbols), where X is greater than or equal to a quantity of symbols (for example, configured by nrofsymbols) corresponding to the PUCCH resource.

Time unit A includes the following situations:
Situation 1: For a HARQ-ACK, time unit A is a time unit that is indicated/triggered by the UE to feed back the HARQ-ACK, for example, slot/sub-slot n+k, where n is an UL slot/sub-slot corresponding to a PDSCH end position/slot, and k is PDSCH-to-HARQ-ACK feedback timing configured by a higher layer or indicated by DCI.
Situation 2: For an SR/CSI, time unit A is a time unit that is for sending the SR/CSI and that is determined by the UE based on a periodicity configured for the SR/CSI and an offset within the period. Time unit A may be slot A or sub-slot A. If time unit A is sub-slot A, the UE further needs to determine sub-slot A based on a configuration of a PUCCH starting symbol position and a configuration of a sub-slot length.

Optionally, if the UE determines to transmit the foregoing PUCCH in the SBFD time unit (for example, the UE determines, according to a particular indication/configuration/rule, that the PUCCH is the PUCCH transmitted in the SBFD time unit, for details, refer to the related method provided in the first part of this embodiment). In this case, for the foregoing ${N}_{PUCCH}^{repeat}$ time units, if a time unit is a non-SBFD time unit, that is, a time unit for the PUCCH overlaps the non-SBFD time unit, the UE does not transmit the PUCCH in the time unit.

Optionally, The UE adds the time unit to a count of ${N}_{PUCCH}^{repeat}$.

Optionally, if the UE determines to transmit the foregoing PUCCH in a non-SBFD time unit (for example, the UE determines, according to a particular indication/configuration/rule, that the PUCCH is the PUCCH transmitted in the non-SBFD time unit, for details, refer to the related method provided in the first part of this embodiment). In this case, for the foregoing ${N}_{PUCCH}^{repeat}$ time units, if a time unit is an SBFD time unit, that is, a time unit for the PUCCH overlaps the SBFD time unit, the UE does not transmit the PUCCH in the time unit.

Optionally, the UE adds the time unit to a count of ${N}_{PUCCH}^{repeat}$.

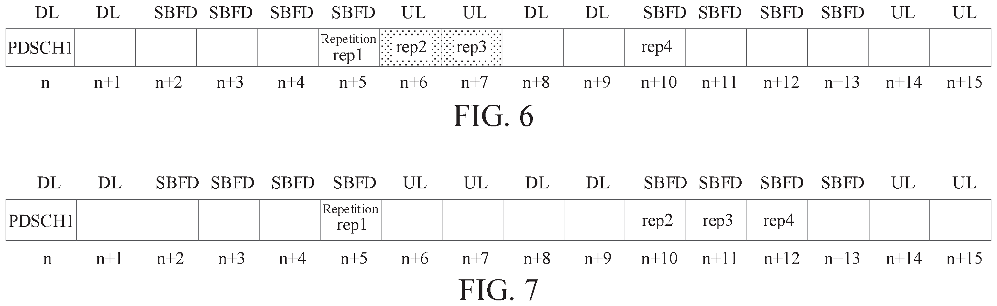

For example, as shown in FIG. 6, the UE is indicated to feed back a HARQ-ACK of PDSCH 1 at slot n+5, and the UE determines that a repetition is configured for a PUCCH resource used by the UE to feed back the HARQ-ACK. It is assumed that a quantity of repetitions ${N}_{PUCCH}^{repeat}$ of the UE is 4. As shown in FIG. 6, the UE determines that slots for the PUCCH repetition are slot n+5, slot n+6, slot n+7, and slot n+10. Because slot n+6 and n+7 are non-SBFD slots, the UE determines that the PUCCH can be transmitted only in an SBFD time domain resource. In this case, the UE cancels the repetition of the PUCCH in slot n+6 and slot n+7, and repeatedly transmits the PUCCH only in slot n+5 and slot n+10. That is, the UE transmits only rep1 and rep4, and does not transmit rep2 and rep3.

It should be noted that during the foregoing PUCCH repetition, channel overlapping may occur between the PUCCH transmission and another uplink transmission. For example, channel overlapping may occur between the PUCCH transmission and another PUCCH transmission, or channel overlapping may occur between the PUCCH transmission and a PUSCH transmission.

In related technologies, the UE processes transmission overlapping on a per-repetition basis (that is, per repetition) when a time domain resource of a PUCCH configured with a repetition overlaps a time domain resource of another PUCCH or a PUSCH (specifically, the PUSCH is a PUSCH whose transmission cannot be performed simultaneously together with the PUCCH). Specifically, based on a priority (for example, a priority index, where priority indexes 0 and 1 respectively indicate a low priority and a high priority) of the PUCCH or a priority of content (for example, CSI) carried in the PUCCH, the UE determines to transmit a specific channel to be transmitted. For example, when channels having different priority indexes overlap, the UE discards a transmission whose priority index is 0. When overlapping occurs between channels having a same priority index, if overlapping occurs between PUCCHs, the UE determines a channel for transmission in an order in which a priority of a HARQ-ACK is higher than that of an SR, the priority of the SR is higher than that of CSI with a high priority (CSI with high priority), and the priority of the CSI with the high priority (CSI with high priority) is higher than that of CSI with a low priority (that is, HARQ-ACK>SR>CSI with high priority>CSI with low priority). When the PUCCH overlaps the PUSCH, the UE discards PUSCH transmission.

In this embodiment, the UE may first perform the steps in the foregoing scheme 1, and then perform overlapping processing (processing manners such as intra-UE multiplexing, prioritization, and cancellation). That is, the UE first determines a time unit for the PUCCH repetition based on an SBFD configuration, and then performs overlapping processing. The UE may alternatively first perform overlapping processing, and then perform the steps in the foregoing scheme 1.

In an implementation, for the PUCCH transmission, the UE first determines, based on a time domain pattern of a time domain resource in which the UE is located, whether a repetition is performed, and then performs overlapping processing between transmissions. For example, in FIG. 6, because time domain patterns of time domain resources in which rep2 and rep3 are located are different from a time domain pattern configured/indicated/specified by the PUCCH, the UE cannot transmit rep2 and rep3. In this case, the UE first cancels rep2 and rep3, and then performs overlapping processing between transmissions. Because rep2 and rep3 are canceled, during subsequent overlapping processing, it is equivalent to that rep2 and rep3 do not exist, and a problem that rep2 and rep3 overlap another uplink transmission correspondingly does not exist. This manner can avoid unnecessary discarding.

In another implementation, for a PUCCH transmission, after determining a time unit ${N}_{PUCCH}^{repeat}$ for transmitting the PUCCH, the UE performs overlapping processing (for example, intra-UE multiplexing). After the processing is completed, if a time domain resource of a repetition of the PUCCH does not meet a requirement, the UE cancels the repetition. In this manner, the UE finally determines whether an uplink channel can be transmitted. This is easy to implement.

Scheme 2: During a PUCCH repetition, the transmission is performed only in time units of a same time domain pattern (for example, an SBFD time unit or a non-SBFD time unit). When time units are of different types, the UE postpones the PUCCH transmission.

Scheme 2-1: If the UE determines to transmit the foregoing PUCCH in an SBFD time unit (for example, the UE determines, according to a particular indication/configuration/rule, that the PUCCH is the PUCCH transmitted in the SBFD time unit, for details, refer to the related method provided in the first part of this embodiment). In this case, the UE determines, according to the following method, ${N}_{PUCCH}^{repeat}$ time units for transmitting the PUCCH:
Starting from time unit A, at least one of the following is satisfied:
The first one symbol (for example, configured by startingSymbolIndex) corresponding to the PUCCH resource is a symbol not for an SS/PBCH (the symbol is an SBFD symbol) and
X consecutive symbols starting from the first one symbol corresponding to the PUCCH resource are not for the SS/PBCH (the X symbols are all SBFD symbols), where X is greater than or equal to a quantity of symbols (for example, configured by nrofsymbols) corresponding to the PUCCH resource.

A meaning of time unit A herein is the same as a meaning of time unit A in scheme 1.

Scheme 2-2: If the UE determines to transmit the foregoing PUCCH in a non-SBFD time unit (for example, the UE determines, according to a particular indication/configuration/rule, that the PUCCH is the PUCCH transmitted in the non-SBFD time unit, for details, refer to the related method provided in the first part of this embodiment). In this case, the UE determines, according to the following method, ${N}_{PUCCH}^{repeat}$ time units for transmitting the PUCCH:
Starting from time unit A, at least one of the following is satisfied:
The first one symbol (for example, configured by startingSymbolIndex) corresponding to the PUCCH resource is a symbol not for an SS/PBCH (the symbol is an UL symbol or a flexible symbol); and
X consecutive symbols starting from the first one symbol corresponding to the PUCCH resource are not for the SS/PBCH (the X symbols are UL symbols or flexible symbols), where X is greater than or equal to a quantity of symbols (for example, configured by nrofsymbols) corresponding to the PUCCH resource.

A meaning of time unit A herein is the same as a meaning of time unit A in scheme 1.

For example, as shown in FIG. 7, the UE is indicated to feed back a HARQ-ACK of PDSCH 1 at slot n+5, and the UE determines that a repetition is configured for a PUCCH resource used by the UE to feed back the HARQ-ACK. It is assumed that a quantity of repetitions ${N}_{PUCCH}^{repeat}$ is 4. As shown in FIG. 7, the UE determines that a time domain pattern of the PUCCH repetition is an SBFD type, the UE determines that slots for transmitting the PUCCH are slot n+5, slot n+10, slot n+11, and slot n+12.

It should be noted that in this embodiment, the symbol not for the SS/PBCH may be understood as: (1) an UL symbol or a flexible symbol not for the SS/PBCH, which is a symbol that is configured as UL/flexible and is not configured for SS/PBCH transmission; and (2) an SBFD symbol not for the SS/PBCH, which is a symbol that is configured as SBFD and is not configured for SS/PBCH transmission. If the SBFD symbol is a symbol that can be configured only in a non-SS/PBCH symbol, when a symbol is configured as an SS/PBCH symbol, the symbol is the SBFD symbol not for the SS/PBCH.

Optionally, this embodiment is applicable to an unpaired spectrum.

3. Method for the UE to determine a power control parameter or spatial information that is during PUCCH repetition

The base station configures or activates two sets of power control parameters or spatial information (for example, the base station activates two sets of spatial information, such as PUCCH-SpatialRelationInfo, for one PUCCH resource by using a MAC CE) for a PUCCH transmission of the UE, and sets two sets of power control parameters (or spatial information) to be respectively used by the UE to transmit the PUCCH in SBFD and non-SBFD. For each repetition of the PUCCH, a first set of power control parameters (or spatial information) and a second set of power control parameters (or spatial information) are respectively used depending on whether a time domain pattern of a time domain resource in which each repetition is located is an SBFD type or a non-SBFD type. For example, the base station configures a plurality of PUCCH-SpatialRelationInfo for transmitting the PUCCH by the UE by using the PUCCH-config, and activates two PUCCH-SpatialRelationInfo for one PUCCH resource (per resource ID) by using the MAC CE, which are respectively used to transmit the PUCCH by the UE in SBFD and non-SBFD. Optionally, the base station configures a mapping relationship between the power control parameter (for example, p0-PUCCH-Value) of the PUCCH and PUCCH-SpatialRelationInfo by using a high layer parameter. The UE determines a corresponding power control parameter based on PUCCH-SpatialRelationInfo used for each repetition.

Specifically, when the UE repeatedly transmits the same PUCCH in a plurality of time units, if the PUCCH includes two sets of power control parameters or two sets of spatial information, the UE determines a parameter for a PUCCH repetition in the following manner:
using a first set of parameters if the time unit in which a PUCCH repetition is located is an SBFD time unit; and
using a second set of parameters if the time unit in which the PUCCH repetition is located is a non-SBFD time unit.

In this embodiment, the time unit may be replaced with a time domain unit, and meanings of the time unit and the time domain unit are time domain unit the same.

In this embodiment, the UE can determine the time unit and the transmission parameter for the PUCCH repetition based on the SBFD configuration. This can improve validity of the PUCCH repetition, thereby improving validity of a communication system.

### Embodiment 2: PUSCH repetition type B transmission scheme

In this embodiment, when numberOfInvalidSymbolsForDL-UL-Switching is configured for the UE, depending on whether an SBFD symbol or a non-SBFD symbol is after a semi-statically configured DL symbol, the UE may determine whether numberOfInvalidSymbolsForDL-UL-Switching symbols that are after the semi-statically configured DL symbol may be used for a PUSCH repetition type B transmission. Specifically, if numberOfInvalidSymbolsForDL-UL-Switching symbols that are after a semi-statically configured DL symbol are SBFD symbols, the numberOfInvalidSymbolsForDL-UL-Switching symbols can be used for a PUSCH repetition type B transmission; or if numberOfInvalidSymbolsForDL-UL-Switching symbols that are after a semi-statically configured DL symbol are non-SBFD symbols, the numberOfInvalidSymbolsForDL-UL-Switching symbols cannot be used for a PUSCH repetition type B transmission.

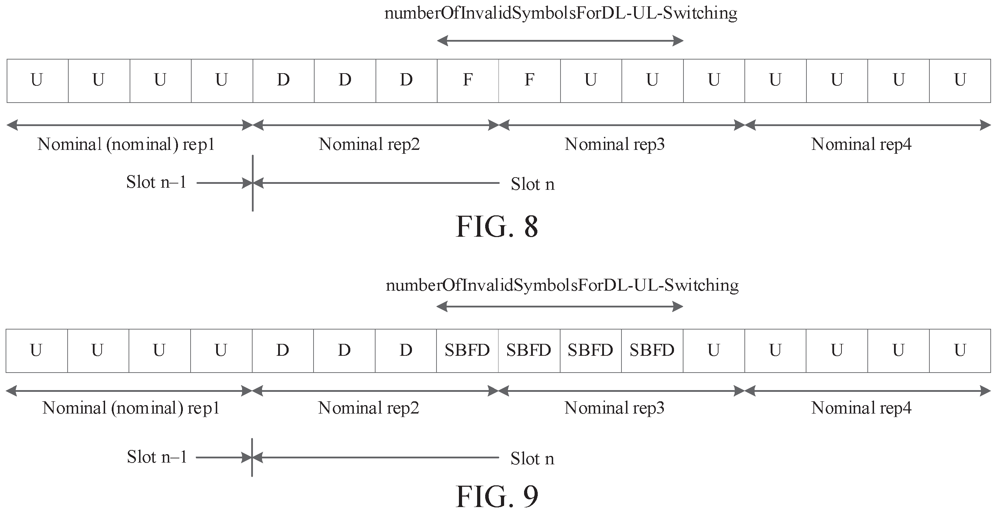

As shown in FIG. 8, it is assumed that PUSCH repetition type B is configured for the UE, a PUSCH is scheduled to be transmitted in slot n-1, and a TDRA of the PUSCH indicates that one PUSCH has a starting symbol, that is, the tenth symbol in slot n-1, a length of four symbols, and four repetitions. In this case, according to a time domain resource determining rule of PUSCH repetition type B, the UE determines that first to fourth nominal repetition positions are as shown in FIG. 8 (rep1 indicates the first repetition, and so on). The first and fourth nominal repetitions do not overlap any invalid symbol, but may be directly transmitted. The second nominal repetition overlaps a semi-statically configured DL symbol (that is, a symbol indicated by D in the figure). In related technologies, if numberOfInvalidSymbolsForDL-UL-Switching is not configured for the UE, the second nominal repetition is divided into two parts, the first three symbols cannot be transmitted, and the last symbol is discarded. The third nominal repetition overlaps a flexible symbol (that is, a symbol represented by F in the figure) and an UL symbol (that is, a symbol represented by U in the figure). If numberOfInvalidSymbolsForDL-UL-Switching is not configured for the UE, the third nominal repetition may be directly transmitted. If numberOfInvalidSymbolsForDL-UL-Switching is configured for the UE, because a symbol on which the third nominal repetition is located is indicated as an invalid symbol, the UE does not transmit the nominal repetition.

As shown in FIG. 9, if an SBFD symbol is configured for the UE, assuming that four symbols that are after a semi-static DL symbol are configured as SBFD symbols by means of semi-static signaling, when the UE determines an invalid symbol of PUSCH repetition type B, numberOfInvalidSymbolsForDL-UL-Switching symbols that are after the semi-static DL symbol in FIG. 9 may still be used for PUSCH repetition type B transmission. Therefore, the third nominal repetition may be performed.

In this embodiment, the UE can determine an available time unit for PUSCH repetition type B transmission based on the SBFD configuration. This can improve validity of the PUSCH repetition type B transmission, thereby improving validity of a communication system.

In conclusion, in this embodiment of this application, the terminal can properly determine a time domain resource position of an uplink repetition under an SBFD configuration, so that the terminal can properly perform the uplink repetition under the SBFD configuration, thereby ensuring communication performance of the terminal.

The uplink transmission method provided in this embodiment of this application may be performed by an uplink transmission apparatus. In this embodiment of this application, the uplink transmission apparatus provided in this embodiment of this application is described by using an example in which the uplink transmission apparatus performs the uplink transmission method.

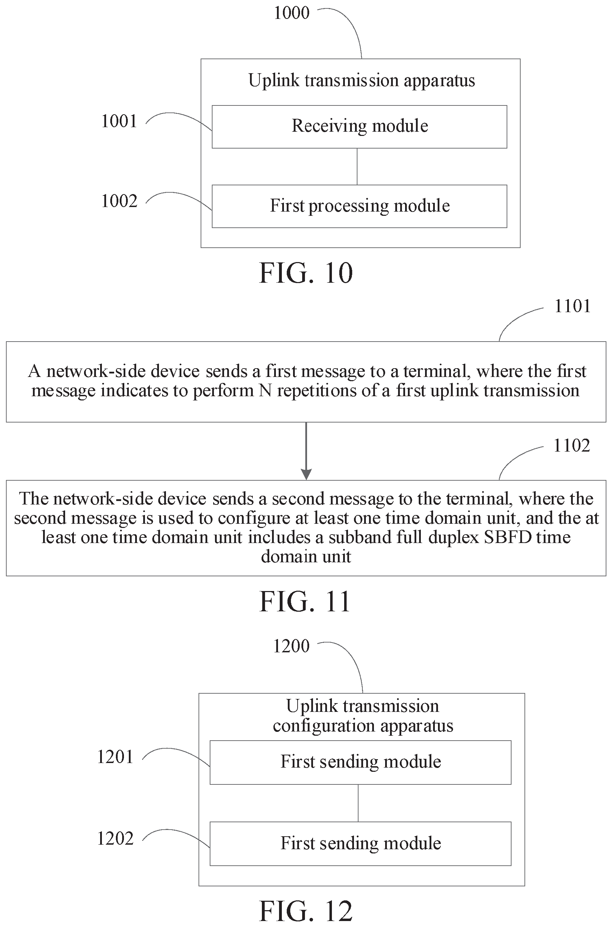

Refer to FIG. 10. An embodiment of this application further provides an uplink transmission apparatus applicable to a terminal. As shown in FIG. 10, the uplink transmission apparatus 1000 includes:
a receiving module 1001, configured to receive a first message from a network-side device, where the first message indicates to perform N repetitions of a first uplink transmission, and N is a positive integer; and
a first processing module 1002, configured to determine, based on a second message from the network-side device, a target time domain unit corresponding to the first uplink transmission, where the second message is used to configure at least one time domain unit, and the at least one time domain unit includes a subband full duplex SBFD time domain unit.

Optionally, the first processing module is specifically configured to:
determine N time domain units starting from a first time domain unit in the at least one time domain unit that meet a first preset condition, as the target time domain unit.

The first preset condition includes at least one of the following:
A target symbol is a symbol not for a synchronization signal SS or a physical broadcast channel PBCH;
the target symbol is an UL symbol, a flexible symbol, or an SBFD symbol;
X consecutive symbols starting from the target symbol are symbols not for the SS or the PBCH; and
X consecutive symbols starting from the target symbol are UL symbols, flexible symbols, or SBFD symbols, where
X is an integer greater than or equal to a quantity of symbols corresponding to the first uplink transmission; and
the target symbol is configured by using a starting symbol index corresponding to the first uplink transmission.

Optionally, it is determined that the first uplink transmission is performed on a time domain resource of an SBFD time domain pattern; and
the first processing module is specifically configured to:
determine N time domain units starting from a first time domain unit in the at least one time domain unit that meet a second preset condition, as the target time domain unit.

The second preset condition includes at least one of the following:
A target symbol is an SBFD symbol not for an SS or a PBCH;
the target symbol is an SBFD symbol;
X consecutive symbols starting from the target symbol are SBFD symbols used for the SS or the PBCH; and
X consecutive symbols starting from the target symbol are SBFD symbols, where
X is an integer greater than or equal to a quantity of symbols corresponding to the first uplink transmission; and
the target symbol is configured by using a starting symbol index corresponding to the first uplink transmission.

Optionally, it is determined that the first uplink transmission is performed on a time domain resource of a non-SBFD time domain pattern; and
the first processing module is specifically configured to:
determine N time domain units starting from a first time domain unit in the at least one time domain unit that meet a third preset condition, as the target time domain unit.

The third preset condition includes at least one of the following:
A target symbol is an uplink symbol or a flexible symbol not for an SS or a PBCH; and
X consecutive symbols starting from the target symbol are uplink symbols or flexible symbols used for the SS or the PBCH, where X is an integer greater than or equal to a quantity of symbols corresponding to the first uplink transmission; and
the target symbol is configured by using a starting symbol index corresponding to the first uplink transmission.

Optionally, the first time domain unit includes at least one of the following:
a time domain unit indicated to feed back first information, where the first information includes a hybrid automatic repeat request acknowledgment HARQ-ACK; and
a time domain unit that is used for sending second information and that is determined based on a periodicity and an offset of the second information, where the second information includes at least one of a scheduling request SR and channel state information CSI.

Optionally, the target time domain unit further satisfies at least one of the following:
symbols that are used for the first uplink transmission and that are in the target time domain unit are all SBFD symbols or non-SBFD symbols; and
an SBFD uplink subband of the target time domain unit covers a frequency domain resource of the first uplink transmission.

Optionally, it is determined that the first uplink transmission is performed on a time domain resource of a target time domain pattern, where the target time domain pattern includes an SBFD time domain pattern or a non-SBFD time domain pattern.

The apparatus further includes:
a second processing module, configured to: n a case that a time domain pattern of a second time domain unit of the first uplink transmission does not match the target time domain pattern, cancel performing the first uplink transmission in the second time domain unit, where
the second time domain unit is at least one time domain unit in the target time domain unit corresponding to the first uplink transmission.

Optionally, the apparatus further includes:
a third processing module, configured to add a quantity of the second time domain units to a total quantity of the target time domain units.

Optionally, the apparatus further includes:
a fourth processing module, configured to perform a first operation in a case that a channel for the first uplink transmission overlaps a channel for the second uplink transmission, where the first operation includes at least one of the following:
cancelling the first uplink transmission;
cancelling the second uplink transmission; and
multiplexing the first uplink transmission and the second uplink transmission.

Optionally, the fourth processing module is specifically configured to:
in a case that the channel for the first uplink transmission overlaps the channel for the second uplink transmission, determine, based on the at least one time domain unit configured by the second message, whether the first uplink transmission and the second uplink transmission are valid; and
perform the first operation in a case that it is determined that the first uplink transmission and the second uplink transmission are valid.

Optionally, the apparatus further includes:
a fifth processing module, configured to determine a target time domain pattern corresponding to an S^{th} repetition of the first uplink transmission, where the time domain pattern includes an SBFD time domain pattern or a non-SBFD time domain pattern, and S is a positive integer less than or equal to N; and
a sixth processing module, configured to determine a transmission parameter for the S^{th} repetition based on the target time domain pattern.

Optionally, the sixth processing module includes:
a receiving unit, configured to receive a third message from the network-side device, where the third message includes a first transmission configuration item and a second transmission configuration item, a mapping relationship exists between the first transmission configuration item and the SBFD time domain pattern, and a mapping relationship exists between the second transmission configuration item and the non-SBFD time domain pattern;
a first processing unit, configured to determine a target transmission configuration item from the first transmission configuration item and the second transmission configuration item based on the target time domain pattern; and
a second processing unit, configured to determine a transmission parameter associated with the target transmission configuration item as the transmission parameter for the S^{th} repetition.

Optionally, the transmission parameter includes at least one of a power control parameter and spatial information.

Optionally, the fifth processing module is specifically configured to perform at least one of the following operations:
in a case that a time domain unit in which the S^{th} repetition is located is configured as an SBFD time domain unit, determining that the target time domain pattern is the SBFD time domain pattern;
in a case that the time domain unit in which the S^{th} repetition is located is configured as a non-SBFD time domain unit, determining that the target time domain pattern is the non-SBFD time domain pattern;
in a case that all symbols in which the S^{th} repetition is located are SBFD symbols, determining that the target time domain pattern is the SBFD time domain pattern;
in a case that all symbols on which the S^{th} repetition is located are non-SBFD symbols, determining that the target time domain pattern is the non-SBFD time domain pattern; and
in a case that the time domain unit in which the S^{th} repetition is located includes both an SBFD symbol and a non-SBFD symbol, determining the target time domain pattern based on a target manner, where
the target manner includes at least one of the following:
   determining the target time domain pattern based on a quantity of included SBFD symbols and a quantity of included non-SBFD symbols;
   determining the target time domain pattern based on a time domain pattern of a symbol that is located at a predefined position and that is in the time domain unit in which the S^{th} repetition is located; and
   determining the target time domain pattern based on a predefined or default time domain pattern of the time domain unit in which the S^{th} repetition is located.

Optionally, the first processing module is specifically configured to:
determine, based on the second message, whether L time domain units located after the third time domain unit are invalid time domain units, where a value of L is configured by a high layer, the third time domain unit is a downlink time domain unit semi-statically configured by using high-layer signaling, and the invalid time domain unit is not used for performing the first uplink transmission.

Optionally, the first processing module is specifically configured to perform at least one of the following operations:
if the L time domain units located after the third time domain unit are non-SBFD time domain units, determining that the L time domain units located after the third time domain unit are invalid time domain units;
if the L time domain units located after the third time domain unit are SBFD time domain units, determining that the L time domain units located after the third time domain unit are not invalid time domain units; and
if the L time domain units located after the third time domain unit include a non-SBFD time domain unit and an SBFD time domain unit, determining that the non-SBFD time domain unit is an invalid time domain unit, and determining that the SBFD time domain unit is not an invalid time domain unit.

In conclusion, in this embodiment of this application, the terminal can properly determine a time domain resource position of an uplink repetition under an SBFD configuration, so that the terminal can properly perform the uplink repetition under the SBFD configuration, thereby ensuring communication performance of the terminal.

The uplink transmission apparatus 1000 in this embodiment of this application may be an electronic device, for example, an electronic device having an operating system, or may be a component, such as an integrated circuit or a chip, in an electronic device. The electronic device may be a terminal, or may be a device other than a terminal. For example, the terminal may include, but is not limited to, the types of the terminals 11 listed above, and the another device may be a server, a network attached storage (Network Attached Storage, NAS), or the like. This is not specifically limited in this embodiment of this application.

The uplink transmission apparatus 1000 provided in this embodiment of this application can implement the processes implemented in the method embodiments in FIG. 3 to FIG. 9 and achieve the same technical effects. To avoid repetition, details are not described herein again.

FIG. 11 is a flowchart of an uplink transmission configuration method according to an embodiment of this application. As shown in FIG. 11, the uplink transmission configuration method includes the following steps:
Step 1101: A network-side device sends a first message to a terminal, where the first message indicates to perform N repetitions of a first uplink transmission, and N is a positive integer.
Step 1102: The network-side device sends a second message to the terminal, where the second message is used to configure at least one time domain unit, and the at least one time domain unit includes a subband full duplex SBFD time domain unit.

For related descriptions of embodiments of this application, refer to related descriptions of the method embodiments in FIG. 3 to FIG. 9. In addition, the same technical effects can be achieved. To avoid duplication, details are not described herein again.

In conclusion, in this embodiment of this application, the terminal can properly determine a time domain resource position of an uplink repetition under an SBFD configuration, so that the terminal can properly perform the uplink repetition under the SBFD configuration, thereby ensuring communication performance of the terminal.

The uplink transmission configuration method provided in this embodiment of this application may be performed by an uplink transmission configuration apparatus. In this embodiment of this application, an uplink transmission configuration apparatus provided in an embodiment of this application is described by using an example in which the uplink transmission configuration apparatus performs the uplink transmission configuration method.

Refer to FIG. 12. An embodiment of this application further provides an uplink transmission configuration apparatus, which may be used in a network-side device. As shown in FIG. 12, the uplink transmission configuration apparatus 1200 includes:
a first sending module 1201, configured to send a first message to a terminal, where the first message indicates to perform N repetitions of a first uplink transmission, and N is a positive integer; and
a second sending module 1202, configured to send a second message to the terminal, where the second message is used to configure at least one time domain unit, and the at least one time domain unit includes a subband full duplex SBFD time domain unit.

In conclusion, in this embodiment of this application, the terminal can properly determine a time domain resource position of an uplink repetition under an SBFD configuration, so that the terminal can properly perform the uplink repetition under the SBFD configuration, thereby ensuring communication performance of the terminal.

The uplink transmission configuration apparatus 1200 in this embodiment of this application may be an electronic device, for example, an electronic device having an operating system, or may be a component, such as an integrated circuit or a chip, in an electronic device. The electronic device may be a terminal, or may be a device other than a terminal. For example, the terminal may include, but is not limited to, the types of the terminals 11 listed above, and the another device may be a server, a network attached storage (Network Attached Storage, NAS), or the like. This is not specifically limited in this embodiment of this application.

The uplink transmission configuration apparatus 1200 provided in this embodiment of this application can implement the processes implemented in the method embodiment in FIG. 11 and achieve the same technical effects. To avoid repetition, details are not described herein again.

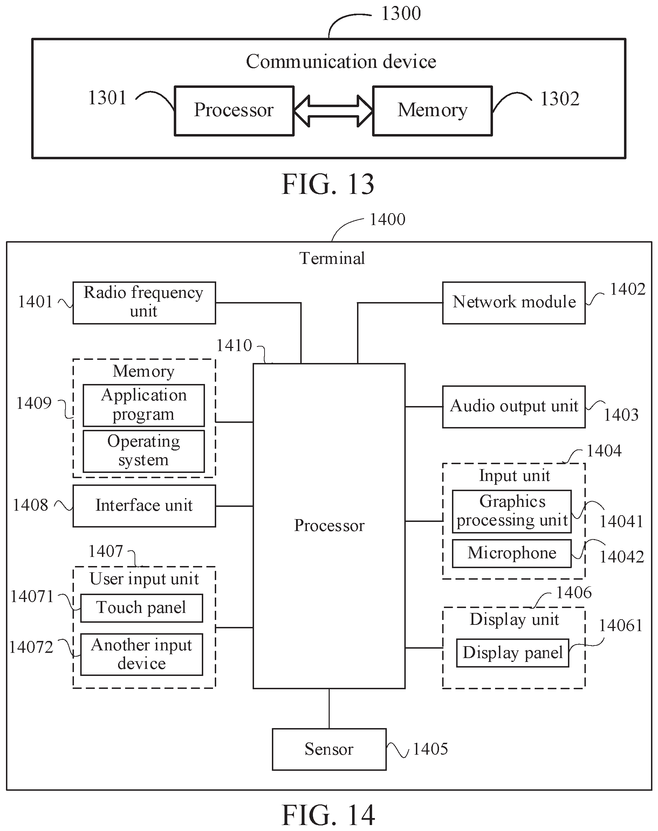

Optionally, as shown in FIG. 13, an embodiment of this application further provides a communication device 1300, including a processor 1301 and a memory 1302. The memory 1302 stores a program or instructions runnable on the processor 1301. For example, when the communication device 1300 is a terminal, the program or the instructions implement the steps of the method embodiments of FIG. 3 to FIG. 9 when executed by the processor 1301, and can achieve same technical effects. When the communication device 1300 is a network-side device, the program or instructions implement the steps in the foregoing method embodiment of FIG. 11 when executed by the processor 1301, and same technical effects can be achieved. To avoid repetition, details are not described herein again.

An embodiment of this application further provides a terminal. The communication interface is coupled to the processor, and the processor is configured to run a program or instructions, to implement the steps in the method embodiments shown in FIG. 3 to FIG. 9. The terminal embodiment corresponds to the foregoing terminal-side method embodiment. Implementation processes and implementations of the foregoing method embodiments are applicable to the terminal embodiment, and the same technical effects can be achieved. Details are as follows. FIG. 14 is a diagram of a hardware structure of a terminal for implementing an embodiment of this application.

The terminal 1400 includes, but is not limited to, at least a part of the components: a radio frequency unit 1401, a network module 1402, an audio output unit 1403, an input unit 1404, a sensor 1405, a display unit 1406, a user input unit 1407, an interface unit 1408, a memory 1409, a processor 1410, and the like.

Persons skilled in the art may understand that the terminal 1400 may further include a power supply (such as a battery) supplying power to the components. The power supply may be logically connected to the processor 1410 via a power management system, thereby implementing functions such as charging, discharging, and power consumption management via the power management system. The structure of the terminal shown in FIG. 14 does not constitute a limitation to the terminal. The terminal may include more or fewer components than those shown in the figure, or some components may be combined, or a different component deployment may be used, and details are not described herein again.

It should be understood that in this embodiment of this application, the input unit 1404 may include a graphics processing unit (Graphics Processing Unit, GPU) 14041 and a microphone 14042. The graphics processing unit 14041 processes image data of a static picture or a video that is obtained by an image capture apparatus (such as a camera) in a video capture mode or an image capture mode. The display unit 1406 may include a display panel 14061. The display panel 14061 may be configured by using a liquid crystal display, an organic light-emitting diode, or the like. The user input unit 1407 includes at least one of a touch panel 14071 and another input device 14072. The touch panel 14071 is also referred to as a touchscreen. The touch panel 14071 may include two parts: a touch detection apparatus and a touch controller. The another input device 14072 may include, but is not limited to, a physical keyboard, a functional key (such as a volume control key or an on/off key), a track ball, a mouse, and a joystick. Details are not described herein again.

In this embodiment of this application, after receiving downlink data from a network-side device, the radio frequency unit 1401 may transmit the data to the processor 1410 for processing. In addition, the radio frequency unit 1401 may transmit uplink data to the network-side device. Generally, the radio frequency unit 1401 includes, but is not limited to, an antenna, an amplifier, a transceiver, a coupler, a low-noise amplifier, a duplexer, and the like.

The memory 1409 may be configured to store a software program or instructions and various data. The memory 1409 may mainly include a first storage area storing the program or instructions and a second storage area storing the data. The first storage area may store an operating system, an application program or instructions required by at least one function (such as a sound playback function and an image display function), and the like. In addition, the memory 1409 may include a volatile memory or a non-volatile memory, or the memory 1409 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 1409 in this embodiment of this application includes but is not limited to these memories and any other suitable type of memory.

The processor 1410 may include one or more processing units. Optionally, the processor 1410 integrates an application processor and a modem. The application processor mainly processes operations related to an operating system, a user interface, an application program, and the like. The modem mainly processes a wireless communication signal, for example, a baseband processor. It may be understood that the foregoing modem may alternatively not be integrated into the processor 1410.

The radio frequency unit 1401 is configured to:
receive a first message from a network-side device, where the first message indicates to perform N repetitions of a first uplink transmission, and N is a positive integer.

The processor 1410 is configured to:
determine, based on a second message from the network-side device, a target time domain unit corresponding to the first uplink transmission, where the second message is used to configure at least one time domain unit, and the at least one time domain unit includes a subband full duplex SBFD time domain unit.

Optionally, the processor 1410 is further configured to:
determine N time domain units starting from a first time domain unit in the at least one time domain unit that meet a first preset condition, as the target time domain unit.

The first preset condition includes at least one of the following:
A target symbol is a symbol not for a synchronization signal SS or a physical broadcast channel PBCH;
the target symbol is an UL symbol, a flexible symbol, or an SBFD symbol;
X consecutive symbols starting from the target symbol are symbols not for the SS or the PBCH; and
X consecutive symbols starting from the target symbol are UL symbols, flexible symbols, or SBFD symbols, where
X is an integer greater than or equal to a quantity of symbols corresponding to the first uplink transmission; and
the target symbol is configured by using a starting symbol index corresponding to the first uplink transmission.

Optionally, it is determined that the first uplink transmission is performed on a time domain resource of an SBFD time domain pattern.

The processor 1410 is further configured to:
determine N time domain units starting from a first time domain unit in the at least one time domain unit that meet a second preset condition, as the target time domain unit.

The second preset condition includes at least one of the following:
A target symbol is an SBFD symbol not for an SS or a PBCH;
the target symbol is an SBFD symbol;
X consecutive symbols starting from the target symbol are SBFD symbols not for the SS or the PBCH; and
X consecutive symbols starting from the target symbol are SBFD symbols, where
X is an integer greater than or equal to a quantity of symbols corresponding to the first uplink transmission; and
the target symbol is configured by using a starting symbol index corresponding to the first uplink transmission.

Optionally, it is determined that the first uplink transmission is performed on a time domain resource of a non-SBFD time domain pattern.

The processor 1410 is further configured to:
determine N time domain units starting from a first time domain unit in the at least one time domain unit that meet a third preset condition, as the target time domain unit.

The third preset condition includes at least one of the following:
A target symbol is an uplink symbol or a flexible symbol not for an SS or a PBCH; and
X consecutive symbols starting from the target symbol are uplink symbols or flexible symbols not for the SS or the PBCH, where X is an integer greater than or equal to a quantity of symbols corresponding to the first uplink transmission; and
the target symbol is configured by using a starting symbol index corresponding to the first uplink transmission.

Optionally, the first time domain unit includes at least one of the following:
a time domain unit indicated to feed back first information, where the first information includes a hybrid automatic repeat request acknowledgment HARQ-ACK; and
a time domain unit that is used for sending second information and that is determined based on a periodicity and an offset of the second information, where the second information includes at least one of a scheduling request SR and channel state information CSI.

Optionally, the target time domain unit further satisfies at least one of the following:
symbols that are used for the first uplink transmission and that are in the target time domain unit are all SBFD symbols or non-SBFD symbols; and
an SBFD uplink subband of the target time domain unit covers a frequency domain resource of the first uplink transmission.

Optionally, it is determined that the first uplink transmission is performed on a time domain resource of a target time domain pattern, where the target time domain pattern includes an SBFD time domain pattern or a non-SBFD time domain pattern.

The processor 1410 is further configured to:
in a case that a time domain pattern of a second time domain unit of the first uplink transmission does not match the target time domain pattern, cancel performing the first uplink transmission in the second time domain unit, where
the second time domain unit is at least one time domain unit in the target time domain unit corresponding to the first uplink transmission.

Optionally, the processor 1410 is further configured to:
add a quantity of the second time domain units to a total quantity of the target time domain units

Optionally, the processor 1410 is further configured to:
perform a first operation in a case that a channel for the first uplink transmission overlaps a channel for the second uplink transmission, where the first operation includes at least one of the following:
cancelling the first uplink transmission;
cancelling the second uplink transmission; and
multiplexing the first uplink transmission and the second uplink transmission.

Optionally, the processor 1410 is further configured to:
in a case that the channel for the first uplink transmission overlaps the channel for the second uplink transmission, determine, based on the at least one time domain unit configured by the second message, whether the first uplink transmission and the second uplink transmission are valid; and
perform the first operation in a case that it is determined that the first uplink transmission and the second uplink transmission are valid.

Optionally, the processor 1410 is further configured to:
determine a target time domain pattern corresponding to an S^{th} repetition of the first uplink transmission, where the time domain pattern includes an SBFD time domain pattern or a non-SBFD time domain pattern, and S is a positive integer less than or equal to N; and
determine a transmission parameter for the S^{th} repetition based on the target time domain pattern

Optionally, the radio frequency unit 1401 is further configured to:
receive a third message from the network-side device, where the third message includes a first transmission configuration item and a second transmission configuration item, a mapping relationship exists between the first transmission configuration item and the SBFD time domain pattern, and a mapping relationship exists between the second transmission configuration item and the non-SBFD time domain pattern.

The processor 1410 is further configured to:
determine a target transmission configuration item from the first transmission configuration item and the second transmission configuration item based on the target time domain pattern; and
determine a transmission parameter associated with the target transmission configuration item as the transmission parameter for the S^{th} repetition.

Optionally, the transmission parameter includes at least one of a power control parameter and spatial information.

Optionally, the processor 1410 is further configured to perform at least one of the following operations:
in a case that a time domain unit in which the S^{th} repetition is located is configured as an SBFD time domain unit, determining that the target time domain pattern is the SBFD time domain pattern;
in a case that the time domain unit in which the S^{th} repetition is located is configured as a non-SBFD time domain unit, determining that the target time domain pattern is the non-SBFD time domain pattern;
in a case that all symbols in which the S^{th} repetition is located are SBFD symbols, determining that the target time domain pattern is the SBFD time domain pattern;
in a case that all symbols on which the S^{th} repetition is located are non-SBFD symbols, determining that the target time domain pattern is the non-SBFD time domain pattern; and
in a case that the time domain unit in which the S^{th} repetition is located includes both an SBFD symbol and a non-SBFD symbol, determining the target time domain pattern based on a target manner, where
the target manner includes at least one of the following:
   determining the target time domain pattern based on a quantity of included SBFD symbols and a quantity of included non-SBFD symbols;
   determining the target time domain pattern based on a time domain pattern of a symbol that is located at a predefined position and that is in the time domain unit in which the S^{th} repetition is located; and
   determining the target time domain pattern based on a predefined or default time domain pattern of the time domain unit in which the S^{th} repetition is located.

Optionally, the processor 1410 is further configured to:
determine, based on the second message, whether L time domain units located after the third time domain unit are invalid time domain units, where a value of L is configured by a high layer, the third time domain unit is a downlink time domain unit semi-statically configured by using high-layer signaling, and the invalid time domain unit is not used for performing the first uplink transmission.

Optionally, the processor 1410 is further configured to perform at least one of the following operations:
if the L time domain units located after the third time domain unit are non-SBFD time domain units, determining that the L time domain units located after the third time domain unit are invalid time domain units;
if the L time domain units located after the third time domain unit are SBFD time domain units, determining that the L time domain units located after the third time domain unit are not invalid time domain units; and
if the L time domain units located after the third time domain unit include a non-SBFD time domain unit and an SBFD time domain unit, determining that the non-SBFD time domain unit is an invalid time domain unit, and determining that the SBFD time domain unit is not an invalid time domain unit.

In conclusion, in this embodiment of this application, the terminal can properly determine a time domain resource position of an uplink repetition under an SBFD configuration, so that the terminal can properly perform the uplink repetition under the SBFD configuration, thereby ensuring communication performance of the terminal.

It may be understood that, for implementation processes of the implementations mentioned in this embodiment, refer to related descriptions of the method embodiments in FIG. 3 to FIG. 9. In addition, the same or corresponding technical effects can be achieved. To avoid repetition, details are not described herein again.

An embodiment of this application further provides a network-side device, including a processor and a communication interface. The communication interface is coupled to the processor, and the processor is configured to run a program or instructions, to implement the steps in the method embodiment shown in FIG. 11. The network-side device embodiment corresponds to the foregoing network-side device method embodiment. Implementation processes and implementations of the foregoing method embodiments may be applicable to the network-side device embodiment, and the same technical effects can be achieved.

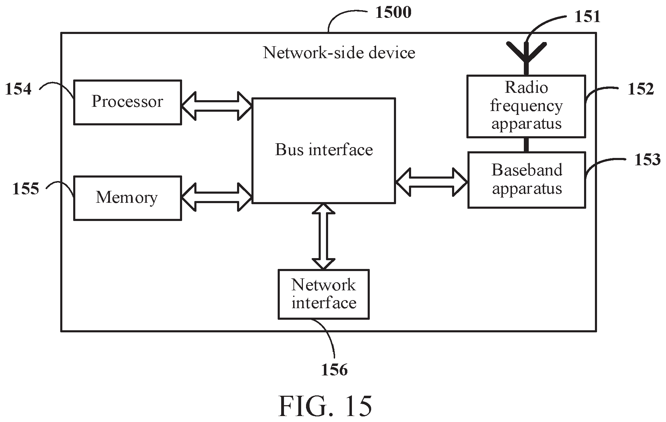

Details are as follows. An embodiment of this application further provides a network-side device. As shown in FIG. 15, the network-side device 1500 includes an antenna 151, a radio frequency apparatus 152, a baseband apparatus 153, a processor 154, and a memory 155. The antenna 151 is connected to the radio frequency apparatus 152. In an uplink direction, the radio frequency apparatus 152 receives information by using the antenna 151, and sends the received information to the baseband apparatus 153 for processing. In a downlink direction, the baseband apparatus 153 processes to-be-sent information and sends processed information to the radio frequency apparatus 152. The radio frequency apparatus 152 processes the received information and sends processed information by using the antenna 151.

The method performed by the network-side device in the foregoing embodiment may be implemented in the baseband apparatus 153, and the baseband apparatus 153 includes a baseband processor.

For example, the baseband apparatus 153 may include at least one baseband board. A plurality of chips are disposed on the baseband board. As shown in FIG. 15, one of the chips is, for example, a baseband processor, and is connected to the memory 155 by using a bus interface, to invoke a program in the memory 155 to perform the operations performed by the terminal or the network-side device shown in the foregoing method embodiments.

The network-side device may further include a network interface 156. The interface is, for example, a common public radio interface (common public radio interface, CPRI).

Details are as follows. The network-side device 150 in this embodiment of this application further includes instructions or a program that is stored in the memory 155 and that can be run on the processor 154. The processor 154 invokes the instructions or program in the memory 155 to perform the method performed by the modules shown in FIG. 12, and the same technical effects can be achieved. To avoid repetition, details are not described herein again.

An embodiment of this application further provides a readable storage medium. The readable storage medium stores a program or instructions. When executed by a processor, the program or instructions implement the processes of the method embodiments of FIG. 3 to FIG. 9, or the processes of the method embodiment of FIG. 11, and the same technical effects can be achieved. To avoid duplication, details are not described herein again.

The processor is the processor in the terminal in the foregoing embodiment, or the processor in the network-side device in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions, to implement the processes of the foregoing method embodiments of FIG. 3 to FIG. 9, or the processes of the foregoing method embodiment of FIG. 11, and the same technical effects can be achieved. To avoid repetitions, details are not described herein again.

It should be understood that the chip mentioned in embodiments of this application may also be referred to as a system-level chip, a system chip, a system-on-chip, a system on a chip, or the like.

An embodiment of this application further provides a computer program/program product. The computer program/program product is stored in a storage medium. The computer program/program product is executed by at least one processor to implement the processes of the foregoing uplink transmission method embodiments of the terminal, or the processes of the foregoing uplink transmission configuration method embodiments of the network-side device. To avoid repetition, details are not described herein again.

An embodiment of this application further provides a communication system, including a terminal and a network-side device. The terminal may be configured to perform steps of uplink transmission method of a terminal side, and the network-side device may be configured to perform steps of an uplink transmission configuration method of a network-side device.

Persons of ordinary skill in the art may be aware that units and algorithm steps in each example described with reference to embodiments herein can be implemented by electronic hardware, or a combination of computer software and electronic hardware. Whether the functions are executed by hardware or software depends on particular applications and design constraints of the technical solutions. Persons skilled in the art may use different methods to implement the described functions for each particular application, but it should not be considered that the implementation goes beyond the scope of the present disclosure.

Persons skilled in the art may clearly understand that, for convenient and concise description, for a specific working process of the foregoing described system, apparatus, and unit, refer to a corresponding process in the foregoing method embodiments. Details are not described herein again.

In embodiments provided in this application, it should be understood that the disclosed apparatus and method may be implemented in other manners. For example, the described apparatus embodiments are merely examples. For example, division into the units is merely logical function division, or may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected according to actual needs to achieve the objectives of the solutions of embodiments.

In addition, functional units in embodiments of the present disclosure may be integrated into one processing unit, or each of the units may exist alone physically, or two or more units may be integrated into one unit.

When the functions are implemented in the form of software functional units and sold or used as independent products, the functions may be stored in a computer-readable storage medium. Based on such an understanding, the technical solutions of the present disclosure essentially, or the part contributing to the related technologies, or the part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of the present disclosure. The foregoing storage medium includes any medium that can store program code, such as a USB flash drive, a removable hard disk, a ROM, a RAM, a magnetic disk, or an optical disc.

Persons of ordinary skill in the art may understand that all or a part of the processes of the methods in the foregoing embodiments may be implemented by a computer program controlling relevant hardware. The program may be stored in a computer-readable storage medium. When the program runs, the processes of the foregoing methods in embodiments are performed. The storage medium may be a magnetic disk, an optical disc, a read-only memory (Read-Only Memory, ROM), a random access memory (Random Access Memory, RAM), or the like.

It should be noted that in this specification, the terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Unless otherwise specified, an element limited by "include a/an..." does not exclude other same elements existing in the process, the method, the article, or the device that includes the element. In addition, it should be noted that the scope of the method and apparatus in embodiments of this application is not limited to performing functions in a sequence shown or discussed, and may further include performing functions in a basically simultaneous manner or in a reverse sequence according to related functions. For example, the described methods may be performed in a sequence different from the described sequence, and various steps may be added, omitted, or combined. In addition, features described with reference to some examples may be combined in other examples.

Through the descriptions of the foregoing implementations, persons skilled in the art may clearly understand that the method in the foregoing embodiments may be implemented by software in addition to a necessary universal hardware platform, or by hardware certainly. However, in most cases, the former is a better implementation. Based on such an understanding, the technical solutions of this application essentially, or the part contributing to the related technologies may be implemented in the form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network-side device, or the like) to perform the methods described in embodiments of this application.

Embodiments of this application are described above with reference to the accompanying drawings. However, this application is not limited to the foregoing specific implementations. The foregoing specific implementations are merely examples, rather than restrictive. Persons of ordinary skill in the art may make many forms without departing from the spirit and scope of this application and claims. All forms fall within the protection of this application.

## Claims

1. An uplink transmission method, comprising:
receiving, by a terminal, a first message from a network-side device, wherein the first message indicates to perform N repetitions of a first uplink transmission, and N is a positive integer; and
determining, by the terminal based on a second message from the network-side device, a target time domain unit corresponding to the first uplink transmission, wherein the second message is used to configure at least one time domain unit, and the at least one time domain unit comprises a subband full duplex SBFD time domain unit.

2. The method according to claim 1, wherein the determining, by the terminal based on a second message from the network-side device, a target time domain unit corresponding to the first uplink transmission comprises:
determining, by the terminal, N time domain units starting from a first time domain unit in the at least one time domain unit that meet a first preset condition, as the target time domain unit, wherein
the first preset condition comprises at least one of the following:
a target symbol is a symbol not for a synchronization signal SS or a physical broadcast channel PBCH;
the target symbol is an UL symbol, a flexible symbol, or an SBFD symbol;
X consecutive symbols starting from the target symbol are symbols not for the SS or the PBCH; and
X consecutive symbols starting from the target symbol are UL symbols, flexible symbols, or SBFD symbols, wherein
X is an integer greater than or equal to a quantity of symbols corresponding to the first uplink transmission; and
the target symbol is configured by using a starting symbol index corresponding to the first uplink transmission.

3. The method according to claim 1, wherein it is determined that the first uplink transmission is performed on a time domain resource of an SBFD time domain pattern; and
the determining, by the terminal based on a second message from the network-side device, a target time domain unit corresponding to the first uplink transmission comprises:
determining, by the terminal, N time domain units starting from a first time domain unit in the at least one time domain unit that meet a second preset condition, as the target time domain unit, wherein
the second preset condition comprises at least one of the following:
a target symbol is an SBFD symbol not for an SS or a PBCH;
the target symbol is an SBFD symbol;
X consecutive symbols starting from the target symbol are SBFD symbols not for an SS or a PBCH; and
X consecutive symbols starting from the target symbol are SBFD symbols, wherein
X is an integer greater than or equal to a quantity of symbols corresponding to the first uplink transmission; and
the target symbol is configured by using a starting symbol index corresponding to the first uplink transmission.

4. The method according to claim 1, wherein it is determined that the first uplink transmission is performed on a time domain resource of a non-SBFD time domain pattern; and
the determining, by the terminal based on a second message from the network-side device, a target time domain unit corresponding to the first uplink transmission comprises:
determining, by the terminal, N time domain units starting from a first time domain unit in the at least one time domain unit that meet a third preset condition, as the target time domain unit, wherein
the third preset condition comprises at least one of the following:
a target symbol is an uplink symbol or a flexible symbol not for an SS or a PBCH; and
X consecutive symbols starting from the target symbol are uplink symbols or flexible symbols not for the SS or the PBCH, wherein X is an integer greater than or equal to a quantity of symbols corresponding to the first uplink transmission; and
the target symbol is configured by using a starting symbol index corresponding to the first uplink transmission.

5. The method according to any one of claims 2 to 4, wherein the first time domain unit comprises at least one of the following:
a time domain unit indicated to feed back first information, wherein the first information comprises a hybrid automatic repeat request acknowledgment HARQ-ACK; and
a time domain unit that is used for sending second information and that is determined based on a periodicity and an offset of the second information , wherein the second information comprises at least one of a scheduling request SR and channel state information CSI.

6. The method according to claim 2, wherein the target time domain unit further satisfies at least one of the following:
symbols that are used for the first uplink transmission and that are in the target time domain unit are all SBFD symbols or non-SBFD symbols; and
an SBFD uplink subband of the target time domain unit covers a frequency domain resource of the first uplink transmission.

7. The method according to claim 2 or 6, wherein it is determined that the first uplink transmission is performed on a time domain resource of a target time domain pattern, wherein the target time domain pattern comprises an SBFD time domain pattern or a non-SBFD time domain pattern; and
the method further comprises:
in a case that a time domain pattern of a second time domain unit of the first uplink transmission does not match the target time domain pattern, cancelling, by the terminal, performing the first uplink transmission in the second time domain unit, wherein
the second time domain unit is at least one time domain unit in the target time domain unit corresponding to the first uplink transmission.

8. The method according to claim 7, wherein the method further comprises:
adding, by the terminal, a quantity of the second time domain units to a total quantity of the target time domain units.

9. The method according to any one of claims 1 to 8, wherein the method further comprises:
performing, by the terminal, a first operation in a case that a channel for the first uplink transmission overlaps a channel for the second uplink transmission, wherein the first operation comprises at least one of the following:
cancelling the first uplink transmission;
cancelling the second uplink transmission; and
multiplexing the first uplink transmission and the second uplink transmission for transmission.

10. The method according to claim 9, wherein the performing, by the terminal, a first operation in a case that a channel for the first uplink transmission overlaps a channel for the second uplink transmission comprises:
in a case that the channel for the first uplink transmission overlaps the channel for the second uplink transmission, determining, by the terminal based on the at least one time domain unit configured by the second message, whether the first uplink transmission and the second uplink transmission are valid; and
performing, by the terminal, the first operation in a case that it is determined that the first uplink transmission and the second uplink transmission are valid.

11. The method according to any one of claims 1 to 10, wherein the method further comprises:
determining, by the terminal, a target time domain pattern corresponding to an S^{th} repetition of the first uplink transmission, wherein the time domain pattern comprises an SBFD time domain pattern or a non-SBFD time domain pattern, and S is a positive integer less than or equal to N; and
determining, by the terminal, a transmission parameter for the S^{th} repetition based on the target time domain pattern.

12. The method according to claim 11, wherein the determining, by the terminal, a transmission parameter for the S^{th} repetition based on the target time domain pattern comprises:
receiving, by the terminal, a third message from the network-side device, wherein the third message comprises a first transmission configuration item and a second transmission configuration item, a mapping relationship exists between the first transmission configuration item and the SBFD time domain pattern, and a mapping relationship exists between the second transmission configuration item and the non-SBFD time domain pattern;
determining, by the terminal, a target transmission configuration item from the first transmission configuration item and the second transmission configuration item based on the target time domain pattern; and
determining, by the terminal, a transmission parameter associated with the target transmission configuration item as the transmission parameter for the S^{th} repetition.

13. The method according to claim 11 or 12, wherein the transmission parameter comprises at least one of a power control parameter and spatial information.

14. The method according to any one of claims 11 to 13, wherein a manner of determining, by the terminal, the target time domain pattern comprises at least one of the following:
in a case that a time domain unit in which the S^{th} repetition is located is configured as an SBFD time domain unit, determining, by the terminal, that the target time domain pattern is the SBFD time domain pattern;
in a case that the time domain unit in which the S^{th} repetition is located is configured as a non-SBFD time domain unit, determining, by the terminal, that the target time domain pattern is the non-SBFD time domain pattern;
in a case that all symbols in which the S^{th} repetition is located are SBFD symbols, determining, by the terminal, that the target time domain pattern is the SBFD time domain pattern;
in a case that all symbols on which the S^{th} repetition is located are non-SBFD symbols, determining, by the terminal, that the target time domain pattern is the non-SBFD time domain pattern; and
in a case that the time domain unit in which the S^{th} repetition is located comprises both an SBFD symbol and a non-SBFD symbol, determining, by the terminal, the target time domain pattern based on a target manner, wherein
the target manner comprises at least one of the following:
determining the target time domain pattern based on a quantity of comprised SBFD symbols and a quantity of comprised non-SBFD symbols;
determining the target time domain pattern based on a time domain pattern of a symbol that is located at a predefined position and that is in the time domain unit in which the S^{th} repetition is located; and
determining the target time domain pattern based on a predefined or default time domain pattern of the time domain unit in which the S^{th} repetition is located.

15. The method according to claim 1, wherein the determining, by the terminal based on a second message from the network-side device, a target time domain unit corresponding to the first uplink transmission comprises:
determining, by the terminal based on the second message, whether L time domain units located after the third time domain unit are invalid time domain units, wherein a value of L is configured by a high layer, the third time domain unit is a downlink time domain unit semi-statically configured by using high-layer signaling, and the invalid time domain unit is not used for performing the first uplink transmission.

16. The method according to claim 15, wherein the determining, by the terminal based on the second message, whether L time domain units located after the third time domain unit are invalid time domain units comprises at least one of the following:
if the L time domain units located after the third time domain unit are non-SBFD time domain units, determining, by the terminal, that the L time domain units located after the third time domain unit are invalid time domain units;
if the L time domain units located after the third time domain unit are SBFD time domain units, determining, by the terminal, that the L time domain units located after the third time domain unit are not invalid time domain units; and
if the L time domain units located after the third time domain unit comprise a non-SBFD time domain unit and an SBFD time domain unit, determining, by the terminal, that the non-SBFD time domain unit is an invalid time domain unit, and determining that the SBFD time domain unit is not an invalid time domain unit.

17. An uplink transmission configuration method, comprising:
sending, by a network-side device, a first message to a terminal, wherein the first message indicates to perform N repetitions of a first uplink transmission, and N is a positive integer; and
sending, by the network-side device, a second message to the terminal, wherein the second message is used to configure at least one time domain unit, and the at least one time domain unit comprises a subband full duplex SBFD time domain unit.

18. An uplink transmission apparatus, wherein the apparatus is used in a terminal, and comprises:
a receiving module, configured to receive a first message from a network-side device, wherein the first message indicates to perform N repetitions of a first uplink transmission, and N is a positive integer; and
a first processing module, configured to determine, based on a second message from the network-side device, a target time domain unit corresponding to the first uplink transmission, wherein the second message is used to configure at least one time domain unit, and the at least one time domain unit comprises a subband full duplex SBFD time domain unit.

19. The apparatus according to claim 18, wherein the first processing module is specifically configured to:
determine N time domain units starting from a first time domain unit in the at least one time domain unit that meet a first preset condition, as the target time domain unit, wherein
the first preset condition comprises at least one of the following:
a target symbol is a symbol not for a synchronization signal SS or a physical broadcast channel PBCH;
the target symbol is an UL symbol, a flexible symbol, or an SBFD symbol;
X consecutive symbols starting from the target symbol are symbols not for the SS or the PBCH; and
X consecutive symbols starting from the target symbol are UL symbols, flexible symbols, or SBFD symbols, wherein
X is an integer greater than or equal to a quantity of symbols corresponding to the first uplink transmission; and
the target symbol is configured by using a starting symbol index corresponding to the first uplink transmission.

20. The apparatus according to claim 18, wherein it is determined that the first uplink transmission is performed on a time domain resource of an SBFD time domain pattern; and
the first processing module is specifically configured to:
determine N time domain units starting from a first time domain unit in the at least one time domain unit that meet a second preset condition, as the target time domain unit, wherein
the second preset condition comprises at least one of the following:
a target symbol is an SBFD symbol not for an SS or a PBCH;
the target symbol is an SBFD symbol;
X consecutive symbols starting from the target symbol are SBFD symbols not for the SS or the PBCH; and
X consecutive symbols starting from the target symbol are SBFD symbols, wherein
X is an integer greater than or equal to a quantity of symbols corresponding to the first uplink transmission; and
the target symbol is configured by using a starting symbol index corresponding to the first uplink transmission.

21. The apparatus according to claim 18, wherein it is determined that the first uplink transmission is performed on a time domain resource of a non-SBFD time domain pattern; and
the first processing module is specifically configured to:
determine N time domain units starting from a first time domain unit in the at least one time domain unit that meet a third preset condition, as the target time domain unit, wherein
the third preset condition comprises at least one of the following:
a target symbol is an uplink symbol or a flexible symbol not for an SS or a PBCH; and
X consecutive symbols starting from the target symbol are uplink symbols or flexible symbols not for the SS or the PBCH, wherein X is an integer greater than or equal to a quantity of symbols corresponding to the first uplink transmission; and
the target symbol is configured by using a starting symbol index corresponding to the first uplink transmission.

22. The apparatus according to claim 19, wherein it is determined that the first uplink transmission is performed on a time domain resource of a target time domain pattern, wherein the target time domain pattern comprises an SBFD time domain pattern or a non-SBFD time domain pattern; and
the apparatus further comprises:
a second processing module, configured to: in a case that a time domain pattern of a second time domain unit of the first uplink transmission does not match the target time domain pattern, cancel performing the first uplink transmission in the second time domain unit, wherein
the second time domain unit is at least one time domain unit in the target time domain unit corresponding to the first uplink transmission.

23. The apparatus according to claim 22, wherein the apparatus further comprises:
a third processing module, configured to add a quantity of the second time domain units to a total quantity of the target time domain units.

24. The apparatus according to any one of claims 18 to 23, wherein the apparatus further comprises:
a fourth processing module, configured to perform a first operation in a case that a channel for the first uplink transmission overlaps a channel for the second uplink transmission, wherein the first operation comprises at least one of the following:
cancelling the first uplink transmission;
cancelling the second uplink transmission; and
multiplexing the first uplink transmission and the second uplink transmission.

25. The apparatus according to claim 24, wherein the fourth processing module is specifically configured to:
in a case that the channel for the first uplink transmission overlaps the channel for the second uplink transmission, determine, based on the at least one time domain unit configured by the second message, whether the first uplink transmission and the second uplink transmission are valid; and
perform the first operation in a case that it is determined that the first uplink transmission and the second uplink transmission are valid.

26. The apparatus according to any one of claims 18 to 25, wherein the apparatus further comprises:
a fifth processing module, configured to determine a target time domain pattern corresponding to an S^{th} repetition of the first uplink transmission, wherein the time domain pattern comprises an SBFD time domain pattern or a non-SBFD time domain pattern, and S is a positive integer less than or equal to N; and
a sixth processing module, configured to determine a transmission parameter for the S^{th} repetition based on the target time domain pattern.

27. The apparatus according to claim 26, wherein the sixth processing module comprises:
a receiving unit, configured to receive a third message from the network-side device, wherein the third message comprises a first transmission configuration item and a second transmission configuration item, a mapping relationship exists between the first transmission configuration item and the SBFD time domain pattern, and a mapping relationship exists between the second transmission configuration item and the non-SBFD time domain pattern;
a first processing unit, configured to determine a target transmission configuration item from the first transmission configuration item and the second transmission configuration item based on the target time domain pattern; and
a second processing unit, configured to determine a transmission parameter associated with the target transmission configuration item as the transmission parameter for the S^{th} repetition.

28. The apparatus according to claim 26 or 27, wherein the fifth processing module is specifically configured to perform at least one of the following operations:
in a case that a time domain unit in which the S^{th} repetition is located is configured as an SBFD time domain unit, determining that the target time domain pattern is the SBFD time domain pattern;
in a case that the time domain unit in which the S^{th} repetition is located is configured as a non-SBFD time domain unit, determining that the target time domain pattern is the non-SBFD time domain pattern;
in a case that all symbols in which the S^{th} repetition is located are SBFD symbols, determining that the target time domain pattern is the SBFD time domain pattern;
in a case that all symbols on which the S^{th} repetition is located are non-SBFD symbols, determining that the target time domain pattern is the non-SBFD time domain pattern; and
in a case that the time domain unit in which the S^{th} repetition is located comprises both an SBFD symbol and a non-SBFD symbol, determining the target time domain pattern based on a target manner, wherein
the target manner comprises at least one of the following:
determining the target time domain pattern based on a quantity of comprised SBFD symbols and a quantity of comprised non-SBFD symbols;
determining the target time domain pattern based on a time domain pattern of a symbol that is located at a predefined position and that is in the time domain unit in which the S^{th} repetition is located; and
determining the target time domain pattern based on a predefined or default time domain pattern of the time domain unit in which the S^{th} repetition is located.

29. The apparatus according to claim 18, wherein the first processing module is specifically configured to:
determine, based on the second message, whether L time domain units located after the third time domain unit are invalid time domain units, wherein a value of L is configured by a high layer, the third time domain unit is a downlink time domain unit semi-statically configured by using high-layer signaling, and the invalid time domain unit is not used for performing the first uplink transmission.

30. The apparatus according to claim 29, wherein the first processing module is specifically configured to perform at least one of the following operations:
if the L time domain units located after the third time domain unit are non-SBFD time domain units, determining that the L time domain units located after the third time domain unit are invalid time domain units;
if the L time domain units located after the third time domain unit are SBFD time domain units, determining that the L time domain units located after the third time domain unit are not invalid time domain units; and
if the L time domain units located after the third time domain unit comprise a non-SBFD time domain unit and an SBFD time domain unit, determining that the non-SBFD time domain unit is an invalid time domain unit, and determining that the SBFD time domain unit is not an invalid time domain unit.

31. An uplink transmission configuration apparatus, wherein the apparatus is used in a network-side device, and comprises:
a first sending module, configured to send a first message to a terminal, wherein the first message indicates to perform N repetitions of a first uplink transmission, and N is a positive integer; and
a second sending module, configured to send a second message to the terminal, wherein the second message is used to configure at least one time domain unit, and the at least one time domain unit comprises a subband full duplex SBFD time domain unit.

32. A communication device, comprising a processor and a memory, wherein the memory stores a program or instructions runnable on the processor; and when executed by the processor, the program or the instructions implement the steps of the uplink transmission method according to any one of claims 1 to 16, or the steps of the uplink transmission configuration method according to claim 17.

33. A readable storage medium, wherein the readable storage medium stores a program or instructions; and when executed by a processor, the program or the instructions implement the steps of the uplink transmission method according to any one of claims 1 to 16, or the steps of the uplink transmission configuration method according to claim 17.
